# EUROPÄISCHE PATENTSCHRIFT

(11) **EP 2 802 404 B1**
(45) Veröffentlichungstag und Bekanntmachung des Hinweises auf die Patenterteilung: **31.03.2021**
(21) Anmeldenummer: 13700557.5
(22) Anmeldetag: 14.01.2013
(51) Int. Cl.: B01D 46/52

(54) **LUFTFILTERELEMENT UND LUFTFILTER**
AIR FILTER ELEMENT AND AIR FILTER
ELÉMENT FILTRANT POUR FILTRE À AIR, ET FILTRE À AIR

(30) Priorität: 13.01.2012 DE 102012000482
(43) Veröffentlichungstag der Anmeldung: 19.11.2014
(73) Patentinhaber: Mann + Hummel GmbH, 71636 Ludwigsburg (DE)
(72) Erfinder: RIEGER, Mario, 71638 Ludwigsburg (DE); HASENFRATZ, Robert, 74523 Schwäbisch Hall (DE); HARENBROCK, Michael, 71640 Ludwigsburg (DE); NGUYEN, Duc Cuong, 30880 Laatzen (DE); NEEF, Pascal, 78647 Trossingen (DE); BLOSSEY, Werner, 71726 Benningen (DE); RÖSGEN, André, 73630 Remshalden (DE); JESSBERGER, Thomas, 71679 Asperg (DE); MADEIRA, Pedro Miguel Pereira, 74321 Bietigheim-Bissingen (DE); HEIM, Michael, 70825 Korntal-Münchingen (DE); SCHMID, Martin, 94419 Reisbach (DE); MBADINGA-MOUANDA, Gelase, 74343 Sachsenheim (DE); WEBER, Andreas, 71691 Freiberg (DE); THALMANN, Christian, 67346 Speyer (DE); SCHMID, Mike, 72072 Tübingen (DE); MENSSEN, Jörg, 29348 Eschede (DE)
(86) Internationale Anmeldenummer: PCT/EP2013/050588
(87) Internationale Veröffentlichungsnummer: WO 2013/104797

(56) Entgegenhaltungen:
- EP-A1- 1 681 085
- WO-A2-2008/147585
- DE-A1- 10 135 690
- DE-A1- 19 816 431
- DE-A1-102004 005 904
- DE-A1-102004 025 274
- DE-B3-102006 009 257
- DE-U1-202005 013 646
- DE-U1-202007 002 106
- DE-U1-202009 000 969
- FR-A1- 2 855 072
- FR-A1- 2 911 924
- GB-A- 2 440 514
- US-A- 3 251 177
- US-A- 5 804 014
- US-A1- 2004 020 177
- US-A1- 2004 035 096
- US-A1- 2006 021 932
- US-A1- 2009 064 647
- US-A1- 2011 067 370
- US-A1- 2011 252 759
- US-B1- 6 955 696

## Beschreibung

### Gebiet der Erfindung

Die Erfindung betrifft das technische Gebiet der Aufbereitung und Filterung von Luft, beispielsweise die Luftfilterung in einem Kraftfahrzeug, einer Land- oder Baumaschine. Insbesondere betrifft die Erfindung ein Luftfilterelement und einen Luftfilter.

### Technischer Hintergrund der Erfindung

Luftfilter werden beispielsweise in der Luftzufuhr von Brennkraftmaschinen verwendet, um die für die Verbrennung zugeführte Luft von Schadstoffen und Schmutzpartikeln zu reinigen, so dass einem Verbrennungsprozess in der Brennkraftmaschine nur gereinigte Luft zugeführt wird.

Ein Luftfilter weist eine Einströmöffnung für ungereinigte Rohluft und eine Ausströmöffnung für die gefilterte Reinluft sowie ein Filterelement auf, wobei das Filterelement die eigentliche Filterfunktion erfüllt. Die Luftzufuhr der Brennkraftmaschine erfolgt über die Ausströmöffnung des Luftfilters, wobei die Brennkraftmaschine die benötigte Luft bzw. Luftmenge ansaugt. Das Filterelement bzw. Luftfilterelement besteht aus einem Filtermedium, beispielsweise einem Filterpapier, durch welches die zu filternde Luft strömt, wenn die Brennkraftmaschine Luft ansaugt, so dass die Schmutzpartikel in dem Filtermedium von der durchströmenden Luft abgetrennt bzw. abgeschieden werden.

Üblicherweise ist das Filtermedium gefaltet (Faltenfilter) oder weist eine Vielzahl von Filterkammern (Flötenfilter) auf, um die Oberfläche des Filters zu vergrößern, wodurch sich auch die Lebensdauer eines Luftfilterelementes verlängert, da eine größere Filteroberfläche mehr Schmutzpartikel aufnehmen kann, bevor der durch abgeschiedenen Staub verursachte Druckverlust am Filtermedium derart angestiegen ist, dass die Luft zu der Brennkraftmaschine nicht mehr in der benötigten Menge durchgelassen wird bzw. die Luft das Filtermedium nicht mehr passieren oder durchströmen kann.

Üblicherweise ist das Filterelement in einem Gehäuse angeordnet, wobei in dem Gehäuse vor der Ausströmöffnung des Luftfilters beispielsweise ein Funktionsbauteil in Form eines Zusatzfilterelementes angeordnet ist. Das Zusatzfilterelement erfüllt dabei die Aufgabe, dass durch den Luftfilter keine Rohluft zu der Brennkraftmaschine strömen kann, selbst wenn das Luftfilterelement aus dem Gehäuse entnommen ist. Damit sind üblicherweise innerhalb des Gehäuses des Luftfilters ein Hauptelement bzw. Luftfilterelement und ein Funktionsbauteil anzuordnen.

Weiterhin kann die bauliche Gestaltung des Gehäuses an äußere Gegebenheiten, z.B. die Platzverhältnisse in einem Motorraum eines Fahrzeugs, angepasst sein. Die bauliche Gestaltung des Gehäuses hat unmittelbaren Einfluss auf die Größe des Luftfilterelementes und damit auch auf die Filterleistung des Luftfilterelementes.

In Abhängigkeit des Volumens innerhalb des Luftfiltergehäuses, welches von dem Funktionsbauteil beansprucht wird, wird das Hauptelement bzw. Luftfilterelement entsprechend verkleinert bzw. die Tiefe der Luftfilterfalten bzw. Filterkammern des Hauptelementes so angepasst, dass der Bauraum innerhalb des Luftfiltergehäuses aufgeteilt wird.

Üblicherweise werden die Falten des Luftfilterelementes so gefaltet bzw. die Tiefen der Filterkammern so gestaltet, dass diese eine gleiche Tiefe haben und stellen damit ein quaderförmiges Luftfilterelement dar. Damit kann es allerdings vorkommen, dass das Funktionsbauteil nicht den gesamten Bauraum einnimmt, welcher durch die quaderförmige Gestaltung des Hauptelementes im Inneren des Gehäuses freigegeben wird.

Die WO 98/47601 bzw. DE 19816431 A1 zeigt ein Filterelement in Gestalt eines Faltenfilterelements für einen Luftfilter, wobei das Filterelement aus einem zickzackförmig gestalteten Filtereinsatz besteht.

Aus DE 20 2007 002 106 U1 ist ein Filterelement mit zick-zack-förmig gefaltetem Filtermedium bekannt, welches längs der Faltentaschen mit abdichtenden Seitenstreifen versehen ist, wobei das Filterelement zu einem Rundfilterelement geformt wird, so dass sich die Endfalten gegenüberstehen und miteinander verbunden sind.

In US 2011/067370 A1 ist ein längliches kegelstumpfförmiges Filterelement beschrieben, das mehrere radial abstehende Komponenten aufweist, die einen Propeller-förmigen Querschnitt bilden.

DE 10 2004 005 904 A1 offenbart einen einstückigen Faltenfilter mit dreieck-förmigem Querschnitt.

In EP 1 681 085 A1 ist ein Filter beschrieben, der ein Filtermedium umfasst, das mit einer Trägerschicht mit mindestens einer flachen Luftkanalwand mit einem bestimmten Steifigkeitsgrad verbunden ist, und der eine Siegelschicht aufweist. Die Verbindung mit der starren Kanalwand erfolgt durch eine Wärmeschweißung ohne Verwendung von zusätzlichem Material. Das Filtermedium wird auf ähnliche Weise mit der Kanalwand verbunden.

In FR 2 911 924 A1 und US 2004/020177 A1 ist eine Luftfiltervorrichtung mit einem plattenförmigen Filterelement beschrieben, wobei das Filterelement in einem eine Schublade bildenden Trägerkörper aufgenommen ist, der in ein Filtergehäuse einschiebbar ist.

Aus US 2004/035096 A1 ist ein Filterelement mit einem das Filtermedium umgebenden Flansch aus elastomerem Material bekannt.

DE 10 2006 009 257 B3 offenbart einen Filter für einen Staubsauger mit einem kassettenartigen Grundrahmen und einem daran angelegten Abdeckrahmen, welche durch eine Scharniereinrichtung miteinander verbunden sind und an wenigstens ein Filtermedium angespritzt sind.

US 2009/064647 A1 beschreibt ein Filterelement mit einem rechteckigen Filtermedium, das in ein Gehäuse eingebracht ist und das ohne luftdichtes Filtergehäuse rechtwinklig zur Fahrtrichtung in ein Nutzfahrzeug eingebaut werden kann.

In US 2011/252759 A1 ist eine Filteranordnung mit einem Rahmen offenbart, der rechteckige Öffnung bildet. Über einen Abschnitt des Umfangs ist ein Kanal ausgebildet, in welches ein Faltenbalg eingebracht ist, der sich über die gesamte Öffnung erstreckt. Mit dem Rahmen kann eine Stützstruktur zur Begrenzung der Bewegung des Filtermediums im Betrieb verbunden werden.

Aus US 6 955 696 B1 ist ein Filterrahmen mit V-förmigen Elementen bekannt, welche jeweils einen Schlitz zur Aufnahme eines Filterelements aufweisen.

In DE 20 2005 013 646 U1 ist ein Filterelement mit zick-zack-förmig gefaltetem Faltenpack und streifenförmigen Rahmenelementen an mindestens zwei Seiten bekannt, wobei an einer dritten Seite ein formstabiles Flächenelement zum lösbaren Anbringen eines Deckelelements dichtend angebracht ist.

US 5 804 014 A beschreibt ein Verfahren zur Herstellung eines Filtereinsatzes mit zick-zack-förmig gefaltetem Medium und Abstandshaltern zwischen den Falten.

DE 10 2004 025 274 A1 offenbart einen flachen Luftfilter mit einem gefalteten Filtermedium, wobei die Höhe der Falten in einem Teil sich von der Höhe der Falten in einem anderen Teil unterscheidet.

DE 20 2009 000969 U1 offenbart ein Rundfilterelement mit einem zick-zack-förmig gefalteten Filtermedium, das sich zwischen zwei Endscheiben erstreckt, wobei die Faltenhöhe zwischen den benachbarten Falten über mehrere Falten hinweg zu- bzw. abnimmt.

### Zusammenfassung der Erfindung

Es kann als eine Aufgabe der Erfindung gesehen werden, eine hohe Filterleistung und eine hohen Lebensdauer der Luftfilterelemente durch eine Vergrößerung der Filterfläche eines Luftfilterelementes unter Berücksichtigung baulicher Vorgaben für das Luftfiltergehäuse zu erzielen.

Es ist ein Luftfilter gemäß den Merkmalen des Patentanspruchs 1 angegeben. Weiterbildungen der Erfindung ergeben sich aus den Unteransprüchen und der folgenden Beschreibung.

Gemäß einer weiteren Ausführungsform der Erfindung ist ein Luftfilterelement mit einer Anströmfläche, einer Abströmfläche, einem Filtermedium und einer Stützstruktur angegeben, wobei sich das Filtermedium zwischen der Anströmfläche und der Abströmfläche erstreckt, wobei das Filtermedium zwischen der Anströmfläche und der Abströmfläche seitlich an der Stützstruktur befestigt ist und wobei die Stützstruktur in ihrer Erstreckungsfläche einen Rückversatz, insbesondere in Form einer Einbuchtung, in Richtung der Anströmfläche und der Abströmfläche aufweist.

Die Stützstruktur kann aus Hartkunststoff oder Kunststoff, insbesondere geschäumtem Kunststoff, beispielsweise PU-Schaum oder PUR-Vergussmassen, bestehen und mit dem Filtermedium verschweißt oder verklebt sein. Ebenso kann es sich bei der Stützstruktur um einen Vliesstoff handeln bzw. kann eine PU-Stützstruktur einen Vliesstoff oder harzverstärkten Vliesstoff aufweisen. Vorzugsweise sorgt die Stützstruktur insbesondere auch für ein seitliches Abdichten der Falten.

Die Stützstruktur kann beispielsweise zwei scheibenförmige Stützelemente (Seitenendscheiben) an gegenüberliegenden Seitenflächen des Filterelementes aufweisen.

Das Filtermedium kann beispielsweise Papier, Vlies, Mikrofaserstoffe, Nanofaserstoffe oder Kunststoff aufweisen bzw. hieraus oder einer Mischung bzw. einem Verbund dieser Materialien bestehen.

Der Rückversatz an der Stützstruktur kann insbesondere so geformt sein, dass der Rückversatz dem Querschnitt eines Freivolumens entspricht, der Rückversatz kann aber insbesondere auch ein geringeres Ausmaß aufweisen als das Freivolumen, was bedeutet, dass z. B. Filterfalten mit der Stützstruktur verbunden sind und entlang der Erstreckungsfläche der Stützstruktur einen vorgegebenen Abstand von dem Rückversatz aufweisen, wobei jede Faltenkante einen individuellen Abstand von dem Rückversatz der Stützstruktur aufweisen kann.

Damit können insbesondere jeweils die Anströmfläche oder die Abströmfläche in Richtung einer Blickrichtung auf eine dieser Flächen hinter dem Rückversatz angeordnet sein. Dies bedeutet mit anderen Worten, dass die Stützstruktur über das Filtermedium hinausragt, und zwar so, dass die Halteflächen einen vorgegebenen Abstand zu der Anströmfläche bzw. zu der Abströmfläche aufweisen.

Damit wird ermöglicht, dass beispielsweise die Stützstruktur beim Einsetzen des Luftfilterelementes in ein Luftfiltergehäuse an einem Funktionsbauteil vorbeigeführt wird und die Halteflächen von Halteflächenaufnahmen aufgenommen und gehalten werden und das Filtermedium dennoch einen gewissem Abstand zu einem Funktionsbauteil aufweist.

Gemäß einer weiteren Ausführungsform der Erfindung weist die Stützstruktur mehrere Rückversätze in Richtung der Anströmfläche und der Abströmfläche. Dabei können einer oder auch mehrere der Rückversätze als Einbuchtungen ausgebildet sein. Vorzugsweise kann zumindest jeweils ein Rückversatz an gegenüberliegenden Seitenflächen der Stützstruktur angeordnet sein, wobei die Stützstruktur beispielsweise zwei scheibenförmige Stützelemente (Seitenendscheiben) an den gegenüberliegenden Seitenflächen aufweist.

Gemäß einer weiteren Ausführungsform der Erfindung deckt die Stützstruktur entlang der Einbuchtung das Filtermedium seitlich ab. Damit dichtet bzw. verschließt die Stützstruktur das Filtermedium an derjenigen Oberfläche des Luftfilterelementes, welche senkrecht auf den Faltenkanten steht.

Gemäß einer weiteren Ausführungsform der Erfindung weist die Stützstruktur eine erste Haltefläche und eine zweite Haltefläche auf, wobei der Rückversatz an der Stützstruktur zwischen der ersten Haltefläche und der zweiten Haltefläche der Stützstruktur ausgebildet ist. Daraus ergibt sich, dass die erste Haltefläche und die zweite Haltefläche beim Einsetzen in ein Luftfiltergehäuse eine höhere Eindringtiefe haben als der Rückversatz an der Stützstruktur bzw. das Filtermedium und der Luftfilter somit von der ersten und der zweiten Haltefläche gehalten wird. Die erste Haltefläche und die zweite Haltefläche können auch fast punktgleich geformt bzw. punktförmig ausgeführt sein, d.h. sehr kleine geometrische Ausmaße kleiner als 1 cm² aufweisen.

Gemäß einer weiteren Ausführungsform der Erfindung erstreckt sich die dem Rückversatz an der Stützstruktur zugeordnete An- bzw. Abströmfläche des Filtermediums bis in einen Bereich seitlich des Rückversatzes an der Stützstruktur. Bei dem Bereich seitlich des Rückversatzes an der Stützstruktur handelt es sich beispielsweise um den Bereich zwischen der ersten Haltefläche bzw. der zweiten Haltefläche und der maximalen Tiefe des Rückversatzes an der Stützstruktur in Form einer Einbuchtung. Dadurch, dass sich die An- bzw. Abströmfläche in den Bereich seitlich des Rückversatzes an der Stützstruktur bzw. der Einbuchtung erstreckt, kann die Oberfläche des Filtermediums trotz Rückversatz bzw. Einbuchtung maximiert werden.

Gemäß einer weiteren Ausführungsform der Erfindung weist die Stützstruktur - ergänzend oder alternativ zu der ersten und zweiten Haltefläche - eine (dritte) Haltefläche auf, die in dem Rückversatz an der Stützstruktur angeordnet ist. Soweit eine erste und zweite Haltefläche vorgesehen sind, ist die dritte Haltefläche auch beispielsweise zwischen der ersten Haltefläche und der zweiten Haltefläche angeordnet. Damit liegt, insbesondere zusätzlich zu der ersten und zweiten Haltefläche, eine weitere (dritte) Haltefläche in z. B. der Einbuchtung auf einer Halteflächenaufnahme in einem Luftfiltergehäuse auf und kann für eine verbesserte Positionierung und Fixierung des Luftfilterelementes in dem Luftfiltergehäuse sorgen.

Gemäß einer weiteren Ausführungsform der Erfindung nimmt wenigstens eine von der ersten, zweiten und dritten Haltefläche eine Haltekraft in Richtung entlang der Erstreckungsfläche der Stützstruktur aufnimmt. Damit sorgt die Haltefläche bzw. sorgen die Halteflächen für eine Positionierung bzw. Fixierung des Luftfilterelementes in einem Luftfiltergehäuse. Die Halteflächen nehmen eine Haltekraft entlang bzw. parallel zu der Erstreckungsfläche der Stützstruktur auf, insbesondere in einer Richtung, welche in Strömungsrichtung der Luft durch den Luftfilter von der Anströmfläche zu der Abströmfläche verläuft.

Erfindungsgemäß weist die dem Rückversatz an der Stützstruktur zugeordnete An- bzw. Abströmfläche wenigstens abschnittsweise eine eindimensionale konkave oder konvexe Form auf, wobei die Krümmung der konkaven oder konvexen Form wenigstens abschnittsweise mit wenigstens einem Teil der Rückversatzes korrespondiert.

Für die eindimensionale konkave oder konvexe Form des Rückversatzes und der Abström- sowie Anströmfläche gelten sinngemäß die nachfolgenden Ausführungen zu der eindimensionalen konkaven oder konvexe Form, welche eine Erhöhung der Filterfläche ermöglichen kann.

Erfindungsgemäß ist das Filtermedium ein aus Falten gebildetes Faltenfiltermedium, wobei die Falten jeweils ein erstes Faltenblatt und ein zweites Faltenblatt aufweisen, die jeweils mit einer Faltenblattkante an einer Faltenkante aneinandergrenzen und die ersten Faltenblätter benachbarter Falten im Wesentlichen parallel zueinanderliegen, wobei sich die ersten und zweiten Faltenblätter zwischen der Anströmfläche und der Abströmfläche erstrecken, wobei die Stützstruktur die Faltenblätter seitlich an den nicht an Faltenblattkanten von jeweils benachbarten Filterblättern angrenzenden Faltenblattkanten abstützt.

Dass die jeweils ersten Faltenblattkanten benachbarter Falten im Wesentlichen parallel zueinanderliegen, bedeutet, dass die Falten eine im Wesentlichen gleiche Erstreckungsrichtung aufweisen, was bedeutet, dass die Luftströmungsrichtung durch die Falten im Wesentlichen in die gleiche Richtung verläuft.

Gemäß einer weiteren Ausführungsform der Erfindung sind die Faltenblätter seitlich an den nicht an Faltenblattkanten von jeweils benachbarten Filterblättern angrenzenden Faltenblattkanten in die Stützstruktur eingebettet. Dies kann zu einer erhöhten mechanischen Festigkeit des Luftfilterelementes führen, da die Faltenblätter formschlüssig mit der Stützstruktur verbunden sind.

Erfindungsgemäß weist die dem Rückversatz zugeordnete An- bzw. Abströmfläche eine mit wenigstens einem Teil des Rückversatzes der Stützstruktur korrespondierende Form auf, indem mehrere Falten mit variierender Faltentiefe vorgesehen sind.

Vorteilhafterweise sind zumindest ein Teil der mehreren Falten mit variierender Faltentiefe aus einer durchgehenden Filtermedienbahn gefertigt. Damit erübrigt sich das Zusammensetzen mehrerer Teilfilter zu einem Luftfilterelement, und es kann aufgrund der variablen Faltentiefe der Falten im Vergleich zueinander z. B. eine gekrümmte Anströmfläche oder Abströmfläche bereitgestellt werden.

Gemäß einer weiteren Ausführungsform der Erfindung sind benachbarte Faltenblätter gegenseitig durch wenigstens eine Abstandhalteeinrichtung stabilisiert. Die Abstandshalteeinrichtung kann insbesondere aus einem Kunststoff gefertigt sein. Beispielsweise wird der geschmolzene Kunststoff zum Ausbilden der Abstandshalteeinrichtung auf das Filtermedium aufgetragen. Vorzugsweise weist die Abstandshalteeinrichtung Klebstoffspuren bzw. Leimraupen auf. Die Abstandshalteeinrichtung, insbesondere die Leimraupen, sind abström- und/oder anströmseitig an dem Filtermedium angeordnet.

Die Abstandshalteeinrichtung bzw. Leimraupen können dabei senkrecht oder schräg zu der Anströmfläche oder der Abströmfläche angeordnet sein. Weiterhin können die Leimraupen bzw. Klebstoffspuren eine durchgehende Klebstoffspur oder eine unterbrochene bzw. gepunktete Klebstoffspur aufweisen und aus mehreren Klebstoffspursegmenten bestehen. Dabei können beispielsweise die Leimraupensegmente bzw. Klebstoffspursegmente so zueinander versetzt sein, dass die unterbrochene Spur einen Winkel zwischen 1° und 90° mit den Faltenkanten bzw. der Anströmfläche oder der Abströmfläche einschließt.

Die Abstandshalteeinrichtung kann dabei beispielsweise dafür sorgen, dass die Faltenblätter einen bestimmten Abstand zueinander einhalten bzw. kann sie insbesondere bewirken, dass ein Öffnungswinkel der Filterfalten gleichbleibt. Dies kann eine gleichbleibende hohe Filterleistung des Luftfilterelementes unterstützen, da sich die Faltenöffnungen aufgrund der Leimraupen nur in geringem Maße verändern können. Insbesondere kann durch die Abstandshalteeinrichtung, insbesondere in Form von Leimraupen, einer Verkleinerung der Faltenöffnungen vorgebeugt werden. Die Faltenblätter einer Filterfalte können sich durch die zwischen ihnen angeordnete Abstandshalteeinrichtung nur in reduziertem Maße aufeinanderzubewegen.

Gemäß einer weiteren Ausführungsform der Erfindung verläuft die Abstandshalteeinrichtung, insbesondere in Form von Klebstoffspuren bzw. Leimraupen, parallel zu den nicht an Faltenblattkanten von jeweils benachbarten Filterblättern angrenzenden Faltenblattkanten. Damit verläuft die Abstandshalteeinrichtung zumindest abschnittsweise in einer Richtung von der Anströmfläche zu der Abströmfläche bzw. umgekehrt und parallel zu der Stützstruktur. Sie setzt der Luftströmung auf diese Weise einen möglichst geringen Strömungswiderstand entgegen.

Gemäß einer weiteren Ausführungsform der Erfindung ist ein Luftfilter mit einem Luftfiltergehäuse und einem Luftfilterelement wie oben und im Folgenden beschrieben angegeben, wobei das Luftfiltergehäuse eine erste Luftströmungsöffnung und eine Luftfilterelementaufnahme aufweist, wobei die Luftfilterelementaufnahme eine Halteflächenaufnahme aufweist, wobei die Halteflächenaufnahme mit wenigstens einem Bereich der Stützstruktur in einer eine Haltekraft übertragenden Weise in Kontakt ist.

Die Luftfilterelementaufnahme ist ausgeführt, das Luftfilterelement in dem Luftfiltergehäuse zu positionieren, indem z. B. der Rückversatz an der Stützstruktur beim Einführen des Luftfilterelementes in das Luftfiltergehäuse von der Luftfilterelementaufnahme aufgenommen und geführt wird, so dass eine gewünschte Position des Luftfilterelementes erreicht wird. Dabei kann die Luftfilterelementaufnahme ausgeführt sein, lediglich die Halteflächen der Stützstruktur zu berühren und das Luftfilterelement damit zu halten bzw. zu positionieren.

Gemäß einer weiteren Ausführungsform der Erfindung ist die Halteflächenaufnahme mit wenigstens einer von der ersten Haltefläche und der zweiten Haltefläche derart in Eingriff, dass der Eingriff eine Haltekraft in Richtung entlang der Erstreckungsfläche der flächigen Stützstruktur aufnimmt. Das Luftfilterelement wird damit in einer Richtung der Luftströmung in seiner Position fixiert.

Gemäß einer weiteren Ausführungsform der Erfindung ist die Halteflächenaufnahme mit wenigstens der dritten Haltefläche derart in Eingriff, dass der Eingriff eine Haltekraft in Richtung entlang der Erstreckungsfläche der flächigen Stützstruktur aufnimmt.

Sinngemäß gelten für die dritte Haltefläche die Ausführungen zu der ersten Haltefläche und der zweiten Haltefläche.

Gemäß einer weiteren Ausführungsform der Erfindung mündet die Luftströmungsöffnung des Luftfiltergehäuses zumindest teilweise in den Rückversatz der Stützstruktur.

Die Luftströmungsöffnung kann an dem Luftfiltergehäuse beliebig angeordnet sein, und überdie Gestaltung des Rückversatzes der Stützstruktur kann gewährleistet werden, dass eine gezielte und widerstandsarme Luftführung bzw. Luftströmung von der Luftströmungsöffnung in das Luftfiltergehäuse und zu dem Luftfilter erfolgt. Sinngemäß gilt dies sowohl für die Einströmöffnung als auch für die Ausströmöffnung an dem Luftfiltergehäuse.

Gemäß einer weiteren Ausführungsform der Erfindung weist das Luftfiltergehäuse einen Vorsprung aufweist, wobei der Rückversatz, insbesondere in Form einer Einbuchtung, mit dem Vorsprung in dem Luftfiltergehäuse in einem positionierenden Eingriff steht. Der Vorsprung an dem Luftfiltergehäuse kann dabei eine Haltekraft auf den Rückversatz bzw. die Einbuchtung und die Stützstruktur ausüben, wie dies auch für die Luftfilterelementaufnahme weiter oben beschrieben wurde.

Gemäß einer weiteren Ausführungsform der Erfindung weist der Luftfilter ferner ein Funktionsbauteil auf, wobei das Funktionsbauteil in den Rückversatz einragt.

Das Luftfilterelement und der Luftfilter, wie oben und im Folgenden beschrieben, dienen insbesondere zur Luftfiltration in Kraftfahrzeugen, Bau- oder Landmaschinen. Im Speziellen dienen sie zur Filtration der Ansaugluft einer Brennkraftmaschine oder zur Filtration der Zuluft eines Fahrzeuginnenraums. Sie können aber auch derart abgewandelt ausgebildet sein, dass sie für andere Fluide, insbesondere auch Flüssigkeiten und Flüssigkeitsgemische genutzt werden. Im Speziellen können sie insofern weitgehend baugleich, aber als Kraftstoff- oder Ölfilterelement für Kraftfahrzeuge bzw. Kraftstoff- oder Ölfilter für Kraftfahrzeuge ausgebildet sein.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

Im Folgenden werden mit Verweis auf die Figuren Ausführungsbeispiele der Erfindung beschrieben.

### Kurzbeschreibung der Figuren

Fig. 1 zeigt eine isometrische Darstellung eines Luftfilterelementes gem. einem Ausführungsbeispiel der Erfindung.
Fig. 2 zeigt eine Seitenansicht eines Luftfilterelementes gem. einem Ausführungsbeispiel der Erfindung.
Fig. 3 zeigt eine Schnittansicht eines Luftfilters gem. einem Ausführungsbeispiel der Erfindung.
Fig. 4 zeigt eine Schnittansicht eines Luftfilterelementes und eines Funktionsbauteils gem. einem Ausführungsbeispiel der Erfindung.
Fig. 5A zeigt einen Querschnitt eines Luftfilterelementes gem. einem Ausführungsbeispiel der Erfindung.
Fig. 5B zeigt einen Querschnitt eines Luftfilterelementes gem. einem Ausführungsbeispiel der Erfindung.
Fig. 5C zeigt einen Querschnitt eines Luftfilterelementes gem. einem Ausführungsbeispiel der Erfindung.
Fig. 5D zeigt einen Querschnitt eines Luftfilterelementes gem. einem Ausführungsbeispiel der Erfindung.
Fig. 5E zeigt einen Querschnitt eines Luftfilterelementes gem. einem Ausführungsbeispiel der Erfindung.
Fig. 5F zeigt einen Querschnitt eines Luftfilterelementes gem. einem Ausführungsbeispiel der Erfindung.
Fig. 5G zeigt einen Querschnitt eines Luftfilterelementes gem. einem Ausführungsbeispiel der Erfindung.
Fig. 6 zeigt einen Querschnitt eines Flötenfilters.
Fig. 7 zeigt ein Luftfilterelement und ein Funktionsbauteil gem. einem Ausführungsbeispiel der Erfindung.
Fig. 8 zeigt eine isometrische Explosionsdarstellung eines Luftfilters mit Luftfilterelement, Gehäuse und Funktionsbauteil gem. einem Ausführungsbeispiel der Erfindung.
Fig. 8A zeigt eine isometrische Darstellung eines Luftfilters mit Luftfilterelement, Gehäuse und Funktionsbauteil gem. einem Ausführungsbeispiel der Erfindung.
Fig. 9 zeigt eine Schnittansicht eines Luftfilters gem. einem Ausführungsbeispiel der Erfindung.
Fig. 9A zeigt eine Schnittansicht eines Luftfilters gem. einem Ausführungsbeispiel der Erfindung.
Fig. 9B zeigt eine Schnittansicht eines Luftfilters gem. einem Ausführungsbeispiel der Erfindung.
Fig. 10 zeigt eine isometrische Darstellung eines Luftfilters gem. einem Ausführungsbeispiel der Erfindung.
Fig. 10A zeigt eine isometrische Darstellung eines Luftfilters gem. einem Ausführungsbeispiel der Erfindung.
Fig. 11A zeigt eine isometrische Darstellung eines Luftfilterelementes gem. einem Ausführungsbeispiel der Erfindung.
Fig. 11B zeigt eine isometrische Darstellung eines Funktionsbauteils für einen Luftfilter gem. einem Ausführungsbeispiel der Erfindung.
Fig. 11C zeigt eine isometrische Darstellung eines Gehäuses eines Luftfilters gem. einem Ausführungsbeispiel der Erfindung.
Fig. 12A zeigt eine isometrische Darstellung eines Luftfilterelementes gem. einem Ausführungsbeispiel der Erfindung.
Fig. 12B zeigt eine isometrische Darstellung eines Funktionsbauteils für einen Luftfilter gem. einem Ausführungsbeispiel der Erfindung.
Fig. 13A zeigt eine isometrische Darstellung eines Luftfilterelementes gem. einem Ausführungsbeispiel der Erfindung.
Fig. 13B zeigt eine isometrische Darstellung eines Funktionsbauteils für einen Luftfilter gem. einem Ausführungsbeispiel der Erfindung.
Fig. 13C zeigt eine isometrische Darstellung eines Luftfilterelementes gem. einem Ausführungsbeispiel der Erfindung.
Fig. 13D zeigt eine isometrische Darstellung eines Luftfilterelementes gem. einem Ausführungsbeispiel der Erfindung.
Fig. 14 zeigt eine Schnittansicht eines Luftfilters mit Hauptelement, Funktionsbauteil und Gehäuse gem.
einem Ausführungsbeispiel der Erfindung.
Fig. 15 zeigt eine isometrische Darstellung eines Luftfilters gem. einem Ausführungsbeispiel der Erfindung.
Fig. 16 zeigt eine Schnittansicht einer isometrischen Darstellung eines Luftfilters gem. einem Ausführungsbeispiel der Erfindung.
Fig. 17 zeigt eine Schnittdarstellung eines Luftfilters gem. einem Ausführungsbeispiel der Erfindung.
Fig. 18 zeigt eine isometrische Darstellung eines Luftfilterelementes gem. einem Ausführungsbeispiel der Erfindung.
Fig. 19 zeigt eine Schnittansicht einer isometrischen Darstellung eines Luftfilters gem. einem Ausführungsbeispiel der Erfindung.
Fig. 20 zeigt eine Schnittansicht eines Luftfilters gem. einem Ausführungsbeispiel der Erfindung.
Fig. 21 zeigt eine Schnittansicht eines Luftfilters gem. einem Ausführungsbeispiel der Erfindung.
Fig. 22 zeigt eine Seitenansicht eines Luftfilters gem. einem Ausführungsbeispiel der Erfindung.
Fig. 23 zeigt eine isometrische Darstellung eines Luftfilterelementes gem. einem Ausführungsbeispiel der Erfindung.
Fig. 24 zeigt eine isometrische Darstellung eines Luftfilters gem. einem Ausführungsbeispiel der Erfindung.
Fig. 25 zeigt eine Schnittansicht einer isometrischen Darstellung eines Luftfilters gem. einem Ausführungsbeispiel der Erfindung.
Fig. 26 zeigt eine isometrische Darstellung eines Luftfilterelementes gem. einem Ausführungsbeispiel der Erfindung.
Fig. 27 zeigt eine Vorderansicht eines Luftfilters gem. einem Ausführungsbeispiel der Erfindung.
Fig. 28 zeigt eine Schnittansicht eines Luftfilters gem. einem Ausführungsbeispiel der Erfindung.
Fig. 29 zeigt eine Schnittansicht einer isometrischen Darstellung eines Luftfilters gem. einem Ausführungsbeispiel der Erfindung.
Fig. 30 zeigt eine isometrische Darstellung eines Luftfilterelementes gem. einem Ausführungsbeispiel der Erfindung.
Fig. 31 zeigt eine Schnittdarstellung eines Luftfilters gem. einem Ausführungsbeispiel der Erfindung.
Fig. 32 zeigt eine Schnittdarstellung einer isometrischen Ansicht eines Luftfilters gem. einem Ausführungsbeispiel der Erfindung.
Fig. 33 zeigt eine Schnittdarstellung einer isometrischen Ansicht eines Luftfilterelementes gem. einem Ausführungsbeispiel der Erfindung.
Fig. 34 zeigt eine Seitenansicht eines Luftfilters gem. einem Ausführungsbeispiel der Erfindung.
Fig. 35 zeigt eine Schnittansicht einer isometrischen Darstellung eines Luftfilters gem. einem Ausführungsbeispiel der Erfindung.
Fig. 36 zeigt eine Seitenansicht eines Luftfilters gem. einem Ausführungsbeispiel der Erfindung.
Fig. 37 zeigt eine Schnittansicht einer isometrischen Darstellung eines Luftfilters gem. einem Ausführungsbeispiel der Erfindung.
Fig. 38 zeigt eine isometrische Darstellung eines Luftfilterelementes gem. einem Ausführungsbeispiel der Erfindung.
Fig. 39 zeigt eine Seitenansicht eines Luftfilters gem. einem Ausführungsbeispiel der Erfindung.
Fig. 40 zeigt eine Schnittansicht einer isometrischen Darstellung eines Luftfilters gem. einem Ausführungsbeispiel der Erfindung.
Fig. 41 zeigt eine isometrische Darstellung eines Luftfilterelementes gem. einem Ausführungsbeispiel der Erfindung.
Fig. 42 zeigt eine isometrische Darstellung eines Luftfilters mit Gehäusedeckel, Luftfilterelement und Gehäusekörper gem. einem Ausführungsbeispiel der Erfindung.
Fig. 43 zeigt eine isometrische Darstellung eines Zusatzfilterelementes für einen Luftfilter gem. einem Ausführungsbeispiel der Erfindung.

Die Darstellungen in den Figuren sind schematisch und nicht maßstabsgetreu.

### Detaillierte Beschreibung von Ausführungsbeispielen

Werden in der folgenden Figurenbeschreibung gleiche Bezugsziffern verwendet, so betreffen diese gleiche oder ähnliche Elemente.

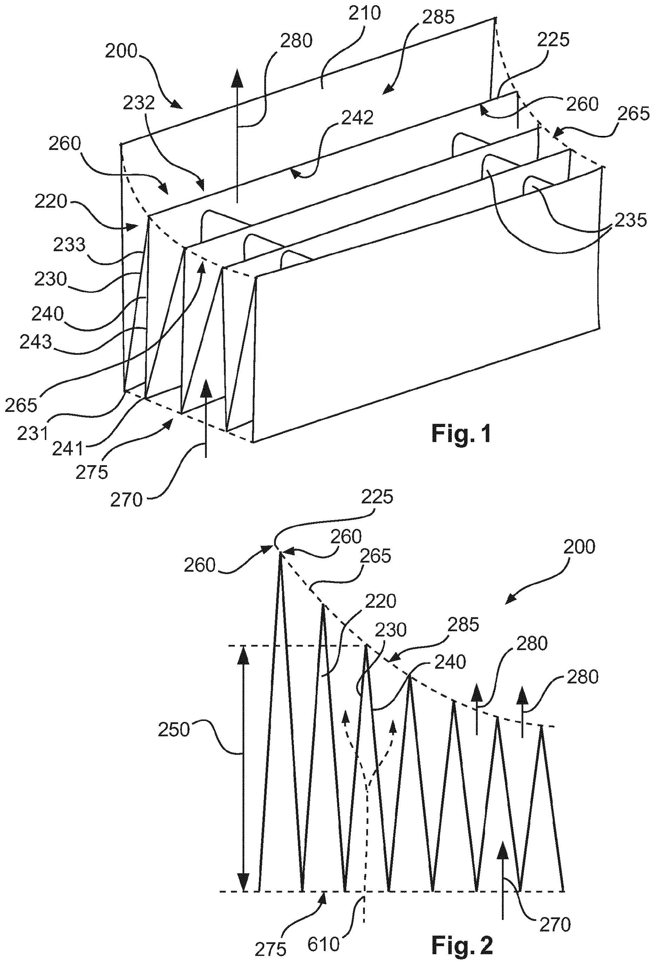

Fig. 1 zeigt ein Luftfilterelement 200 bzw. ein Hauptelement 200 eines Luftfilters. Das Luftfilterelement 200 weist eine Mehrzahl von Filterfalten 220 auf, wobei jede Filterfalte 220 von einem ersten Faltenblatt 230 und einem zweiten Faltenblatt 240 gebildet wird. Die Filterfalten 220 bzw. die ersten Faltenblätter 230 und die zweiten Faltenblätter 240 erstrecken sich dabei in einer Richtung von der Anströmrichtung 270 zu der Abströmrichtung 280 bzw. umgekehrt. Senkrecht zu der Anströmrichtung 270 bzw. Abströmrichtung 280 verläuft die Faltenkante 225 einer jeden Filterfalte 220. Die Faltenkante 225 stellt dabei den Übergang von einem ersten Faltenblatt zu einem zweiten Faltenblatt dar und wird sowohl an der Anströmfläche 275 als auch an der Abströmfläche 285 des Luftfilterelementes 200 gebildet.

Die Faltenkante 225 wird auf der Anströmseite bzw. Anströmfläche 275 von einer anströmseitigen Faltenblattkante 231 des ersten Faltenblattes 230 und von einer anströmseitigen Faltenblattkante 241 des zweiten Faltenblattes 240 gebildet. Analog dazu wird eine Faltenkante 225 auf der Abströmfläche 285 durch eine abströmseitige Faltenblattkante 232 des ersten Faltenblattes 230 und eine abströmseitige Faltenblattkante 242 des zweiten Faltenblattes 240 gebildet.

Eine Faltenblattkante 260, d. h. die anströmseitige Faltenblattkante 231 oder die abströmseitige Faltenblattkante 232 des ersten Faltenblattes 230 oder die anströmseitige Faltenblattkante 241 oder die abströmseitige Faltenblattkante 242 des zweiten Faltenblattes 240, wird gebildet, indem ein Faltenblatt auf die Filterfalte mit der Faltenkante des Faltenblattes trifft, d. h. dass die Faltenkanten zweier Faltenblätter die Filterfalte 220 bilden.

Von der Anströmfläche 275 zu der Abströmfläche 285 verlaufen eine seitliche Faltenblattkante 233 des ersten Faltenblattes 230 sowie eine seitliche Faltenblattkante 243 des zweiten Faltenblattes 240.

Die Filterwirkung des Luftfilterelementes 220 wird dadurch erzielt, dass ein Filtermedium genutzt wird, um die Filterfalten 220 zu bilden und dass ungereinigte Luft, sog. Rohluft, in Anströmrichtung 270 auf die Anströmfläche 275 strömt und durch das Filtermedium hindurch in Richtung der Abströmfläche 285 in Abströmrichtung 280 strömt und dabei gereinigt wird, so dass auf der Abströmfläche 285 Reinluft vorliegt.

Die Faltenkanten 225 aller Filterfalten 220 auf der Anströmfläche 275 bzw. auf der Abströmfläche 285 bilden eine sog. Einhüllende 265, wobei die eine Einhüllende 265 insbesondere eine einhüllende Fläche der Faltenkanten auf der Anströmfläche oder auf der Abströmfläche sein kann.

Die Faltenkanten 225 spannen ebenso die Anströmfläche und die Abströmfläche auf, wobei die Einhüllende derjenigen dieser beiden Flächen entspricht, welche ein Funktionsbauteil räumlich umschließt bzw. umgibt.

Hierbei handelt es sich um eine Verbindungslinie der Faltenkanten 225 an der Abströmfläche 285 oder an der Anströmfläche 275, wobei die Verbindungslinie senkrecht zu den Faltenkanten verläuft und die Verbindungslinie insbesondere mit Abströmfläche oder Anströmfläche eine eindimensionale konkave Fläche oder Form bildet.

Eine eindimensionale konkave Fläche weist dabei lediglich eine Krümmung in einer Richtung auf. Diese Krümmung der eindimensionalen konkaven Fläche in einer Richtung ergibt sich beispielsweise dadurch, dass die Faltentiefen benachbarter Filterfalten stetig abnehmen oder stetig zunehmen, so dass die Faltenkanten 225 einen variablen Abstand zu der jeweils entgegengesetzten Fläche, d. h. Anströmfläche 275 oder Abströmfläche 285 haben. Die Einhüllende 265 und die Faltenkanten 225 bilden damit eine eindimensional gekrümmte konkave Fläche, da die eindimensionale konkave Fläche in Richtung der Einhüllenden 265 gekrümmt ist, in Richtung des Verlaufs der Faltenkanten 225 aber keine Krümmung aufweist.

In den Falten erstrecken sich Leimraupen 235 in einer Richtung von der Anströmfläche zu der Abströmfläche und sorgen für eine erhöhte Stabilität des Filtermediums.

Fig. 2 zeigt eine Seitenansicht eines Luftfilterelementes 200 mit einer Mehrzahl von Filterfalten 220. Die Einhüllende 265 an der Abströmfläche 285 wird dadurch gebildet, dass die Faltenkante 225 einer jeden Filterfalte 220 einen unterschiedlichen Abstand zu der Anströmfläche 275 aufweist. Die sog. Faltentiefe 250 verläuft dabei in Richtung der Einhüllenden 265 je nach Betrachtungsrichtung entweder stetig abnehmend oder stetig zunehmend. Es können aber selbstverständlich auch benachbarte Filterfalten die gleiche Faltentiefe 250 aufweisen.

In anderen Ausführungsbeispielen kann die Einhüllende 265 aber auch so gestaltet sein, dass die Faltentiefe benachbarter Filterfalten zunächst abnimmt und dann erneut wieder zunimmt. Allgemein kann die Einhüllende 265 einen beliebigen Verlauf annehmen und dabei so ausgeführt sein, dass eine Anströmfläche 275 oder eine Abströmfläche 285 des Luftfilterelementes 200 den äußeren Gegebenheiten durch die Konstruktion eines Luftfilters oder eines Luftfiltergehäuses entspricht oder angepasst ist.

Wie der Darstellung in Fig. 2 zu entnehmen ist, strömt die Rohluft in Anströmrichtung 270 auf die Anströmfläche 275, dringt dann in die Filterfalten 220 ein, verteilt sich entlang der Luftfließrichtung 610 so, dass die Luft auf der Anströmseite durch das erste Faltenblatt 230 und das zweite Faltenblatt 240 einer jeden Filterfalte 220 hindurchdringt und dabei gefiltert wird, so dass die gefilterte Luft in Abströmrichtung 280 auf der Abströmfläche 285 aus dem Luftfilterelement 200 herauskommt, wobei die Luft auf der Abströmseite des Luftfilterelementes 200 als Reinluft bezeichnet wird.

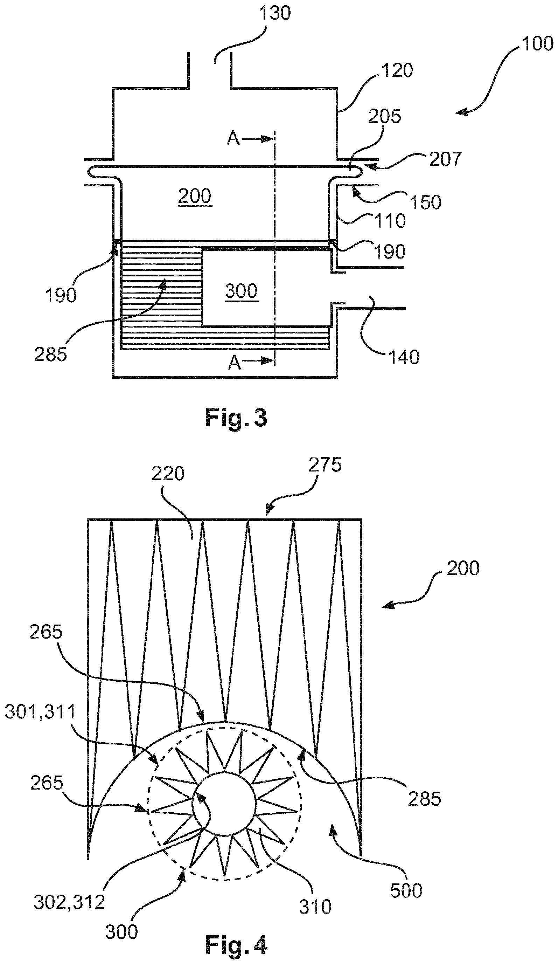

Fig. 3 zeigt eine Schnittansicht eines Luftfilters 100, wobei der Luftfilter 100 einen Gehäusekörper 110 und einen Gehäusedeckel 120 aufweist, welche gemeinsam das Gehäuse des Luftfilters bilden.

Innerhalb des Gehäuses befindet sich ein Luftfilterelement 200 und ein Funktionsbauteil 300, beide jeweils angeordnet zum Filtern von durchströmender Luft. Das Luftfilterelement 200 ist in dem Gehäusekörper 110 angeordnet und wird von zwei Halteflächenaufnahmen 190 gehalten bzw. die Position des Luftfilterelementes 200 innerhalb des Gehäusekörpers 110 fixiert. Ebenso weist das Luftfilterelement 200 eine Dichtung 205 auf, welche zumindest für einen dichtenden Abschluss des Gehäusekörpers 110 mit dem Luftfilterelement sorgt. Zusätzlich kann durch die Dichtung 205 eine Abdichtung zwischen dem Gehäusekörper 110 und dem Gehäusedeckel 120 bzw. zwischen dem Luftfilterelement 200 und dem Gehäusedeckel 120 erfolgen. Die Dichtung 205 kann sowohl an dem Luftfilterelement 200 als auch an dem Gehäusekörper 110 oder dem Gehäusedeckel 120 angeordnet bzw. befestigt sein.

Funktionswesentlich für die Dichtung 205 ist, dass ungefilterte Luft an dem Luftfilterelement 200 vorbei zum Reinluftanschluss 140 erlangen kann. Außerdem sollte sie auch das Gehäuse des Luftfilters 100 zumindest weitgehend dicht verschließen. Dies bedeutet, dass Luft durch den Rohluftanschluss 130 oder durch die erste Einströmöffnung 130 in das Gehäuse des Luftfilters 100 eindringt, dort das Luftfilterelement 200 und das Funktionsbauteil 300 passiert und als gefilterte Reinluft am Reinluftanschluss 140 bzw. an der Ausströmöffnung 140 des Luftfilters 100 das Gehäuse des Luftfilters gefiltert verlässt.

Die Dichtung 205 ist dabei zwischen dem Gehäusekörper 110, dem Gehäusedeckel 120 und dem Luftfilterelement 200 vorgesehen, damit keine ungefilterte Luft in das Gehäuse des Luftfilters so eindringen kann, dass diese an dem Reinluftanschluss 140 das Gehäuse verlassen kann, ohne durch das Filtermedium des Luftfilterelementes 200 geströmt und gereinigt ist.

Der Gehäusekörper 110 weist eine Luftfilterelementaufnahme 150 auf, in welche ein sog. Filterkragen 207 eingreifen kann. Der Filterkragen 207 ist ausgeführt, das Luftfilterelement 200 mechanisch an den Gehäusekörper zu fixieren.

Der Luftstrom der zu reinigenden bzw. zu filternden Luft in dem in Fig. 3 gezeigten Luftfilter 100 verläuft über bzw. durch den Rohluftanschluss 130, das Luftfilterelement 200, das Funktionsbauteil 300 und den Reinluftanschluss 140. Dabei wird die Luft im Wesentlichen durch das Luftfilterelement 200 gereinigt, verlässt dieses an der Abströmfläche 285 und verlässt sodann das Gehäuse des Luftfilters 100 über das Funktionsbauteil 300.

Bei dem Funktionsbauteil 300 kann es sich dabei um ein Zusatzfilterelement oder um ein sonstiges Funktionsbauteil handeln, welches innerhalb des Gehäuses des Luftfilters 100 angeordnet ist.

Fig. 4 zeigt eine Schnittansicht eines Hauptelementes 200 bzw. eines Luftfilterelementes 200 und eines Funktionsbauteils 300 in Form eines sterngefalteten Zusatzfilterelementes 310 entlang der Schnittlinie A-A aus Fig. 3. Insbesondere ist der Fig. 4 zu entnehmen, dass das Funktionsbauteil 300 in bzw. an die Einhüllende 265 des Luftfilterelementes 200 angepasst ist.

Sowohl das Hauptelement 200 als auch das Funktionsbauteil in Form eines Zusatzfilterelements 310 weisen dabei Filterfalten 200 mit variabler Faltentiefe auf, wobei die Faltentiefe der jeweiligen Filterfalten so aufeinander abgestimmt ist, dass die Einhüllende 265 der Abströmfläche 285 des Luftfilterelements 200 mit der Einhüllenden 265 der Anströmfläche 301 des Funktionsbauteils 300 bzw. der Anströmfläche 311 des Zusatzfilterelements 310 korrespondiert.

Die Luftströmung durch das Hauptelement 200 und das Funktionsbauteil 300 verläuft so, dass die zu reinigende Luft auf der Anströmfläche 275 des Hauptelementes 200 in dieses eindringt, sodann das Hauptelement 200 auf der Abströmfläche 285 verlässt und anschließend auf der Anströmfläche 311 des Zusatzfilterelementes 310 in das Zusatzfilterelement eindringt und dieses an der Abströmfläche 312 verlässt.

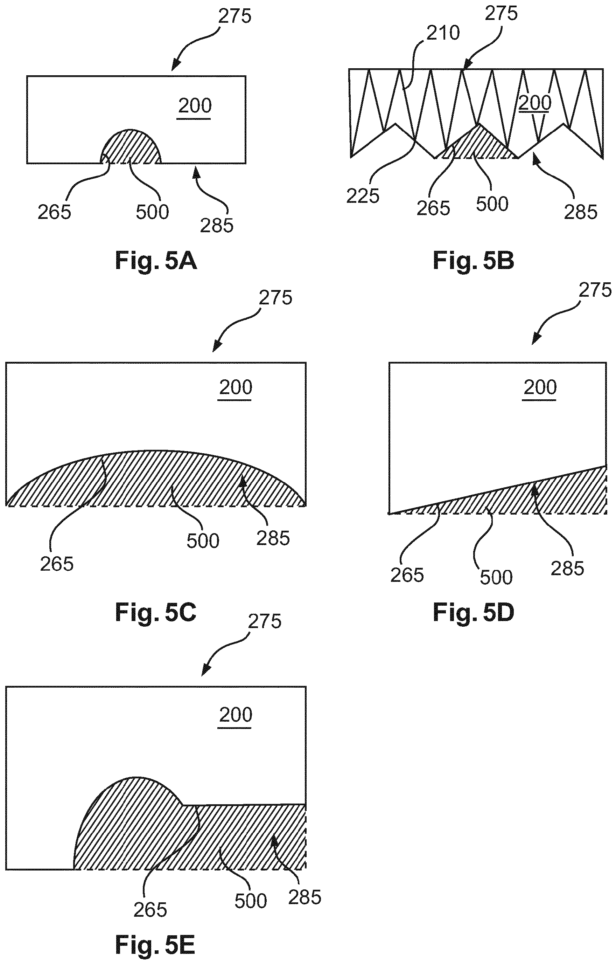

Fig. 5A zeigt die Darstellung eines Querschnitts eines Luftfilterelementes 200, wobei die Abströmfläche 285 ein halbkreisförmiges Freivolumen aufweist, welches halbkreisförmige Freivolumen lediglich einen Teil der Abströmfläche 285 ausnimmt und das halbkreisförmige Freivolumen von der Einhüllenden 265 gebildet wird.

Fig. 5B zeigt den Querschnitt eines Luftfilterelementes 200, wobei die Abströmfläche 285 einen sägezahnförmigen Querschnitt aufweist. Der sägezahnförmige Querschnitt erstreckt sich dabei über die gesamte Breite des Luftfilterelementes 200. Die Einhüllende 265 verbindet die Faltenkanten 225 der Filterfalten des Filtermediums 210.

Es sei insbesondere darauf hingewiesen, dass die Anzahl der Filterfalten nicht von der Form und den Ausmaßen des Querschnitts der Abströmfläche 285, d. h. dem Verlauf der Einhüllenden 265, vorgegeben bzw. beeinflusst wird.

Ebenso wie in Fig. 5B gezeigt, kann das Luftfilterelement 200 in allen oben und im Folgenden beschriebenen Ausführungsbeispielen eine Vielzahl von Filterfalten aufweisen, wobei die Filterfalten bzw. die Anzahl der Filterfalten nicht von dem Verlauf oder dem Querschnitt der Einhüllenden 265 vorgegeben oder bestimmt werden.

Fig. 5C zeigt einen ellipsenförmigen bzw. halbkreisförmigen Verlauf der Einhüllenden 265 der Abströmfläche 285 des Luftfilterelementes 200. Dabei erstreckt sich der halbkreisförmige bzw. elliptische Verlauf der Einhüllenden 265 über die gesamte Breite des Luftfilterelementes 200 bzw. über die gesamte Breite der Abströmfläche 285.

Fig. 5D zeigt ein Luftfilterelement 200, dessen Abströmfläche 285 so verläuft, dass eine Filterfaltentiefe in einer Richtung der Einhüllenden 265 stetig abnimmt bzw. stetig zunimmt. Dabei kann die Einhüllende 265 der Faltenkanten auf der Abströmfläche in Form einer Hyperbel verlaufen, so dass sich eine konkave Form der Abströmfläche 285 ergibt. Die Einhüllende kann aber auch linear verlaufen, d.h. dass die Einhüllende keine Krümmung aufweist und damit eine einhüllende Linie ist.

Fig. 5E zeigt ein Luftfilterelement 200, dessen Abströmfläche 285 gestuft verläuft, wobei die Abstufungen der Abströmfläche 285 über einen halbkreisförmigen Verlauf der Einhüllenden 265 miteinander verbunden sind.

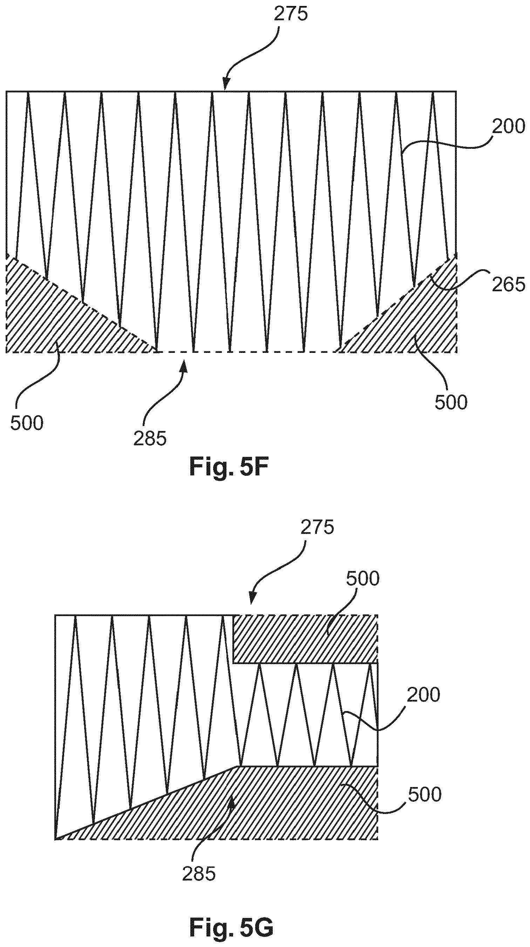

Fig. 5F zeigt ein Luftfilterelement 200, dessen Abströmfläche 285 trapezförmig verläuft, und zwar so, dass die Filterfaltentiefe der mittigen Filterfalten 220 höher ist als die Faltentiefe derjenigen Filterfalten am Rande der Querschnittsdarstellung. Die Einhüllende 265 der Abströmfläche kann dabei in den Bereichen zunehmender Faltentiefe ausgehend von den Rändern zur Mitte des Luftfilterelementes 200 linear oder gekrümmt verlaufen.

Fig. 5G zeigt ein Luftfilterelement 200, dessen Anströmfläche 275 einen abgestuften Verlauf aufweist, und dessen Abströmfläche 285 einen Bereich linear abnehmender Faltentiefe und einen Bereich von konstanter Faltentiefe aufweist. Damit weist die Einhüllende einen trapezförmigen Verlauf auf, wobei es sich um eine symmetrische oder asymmetrische Form des trapezförmigen Verlaufs der Einhüllenden handeln kann.

Wie aus den Fig. 5F und 5G ersichtlich ist, können Anströmfläche 275 und Abströmfläche 285 einen beliebigen Verlauf bzw. eine beliebige Einhüllende der Faltenkanten aufweisen.

Ebenso können die Verläufe der Anströmfläche 275 und der Abströmfläche 285 wie in den Fig. 5A bis 5G gezeigt bei Flötenfiltern angewandt werden.

Bei den in den Fig. 5A bis 5G gezeigten Querschnitten des Luftfilterelementes 200 und den Verläufen der Einhüllenden 265 handelt es sich um beispielhafte und nicht abschließende Aufzählungen der möglichen Formen der Einhüllenden 265. Vielmehr kann über eine variabel gehaltene Faltentiefe der Filterfalten ein beliebiger Verlauf der Einhüllenden 265 der Faltenkanten auf der Anströmfläche 275 oder auf der Abströmfläche 285, aber auch auf beiden, der Abströmfläche 285 und der Anströmfläche 275, jeder gewünschte Verlauf der Einhüllenden 265 auf der entsprechenden Fläche erzielt werden.

Die Fig. 5A bis 5G zeigen jeweils als schraffierte Fläche das Freivolumen bzw. die Freivolumina 500, wobei die Freivolumina jeweils so ausgestaltet sind, dass sie die räumliche Differenz zu einem quaderförmigen Luftfilterelement ausgehend von einem der Luftfilterelemente wie oben und im Folgenden beschrieben, darstellen.

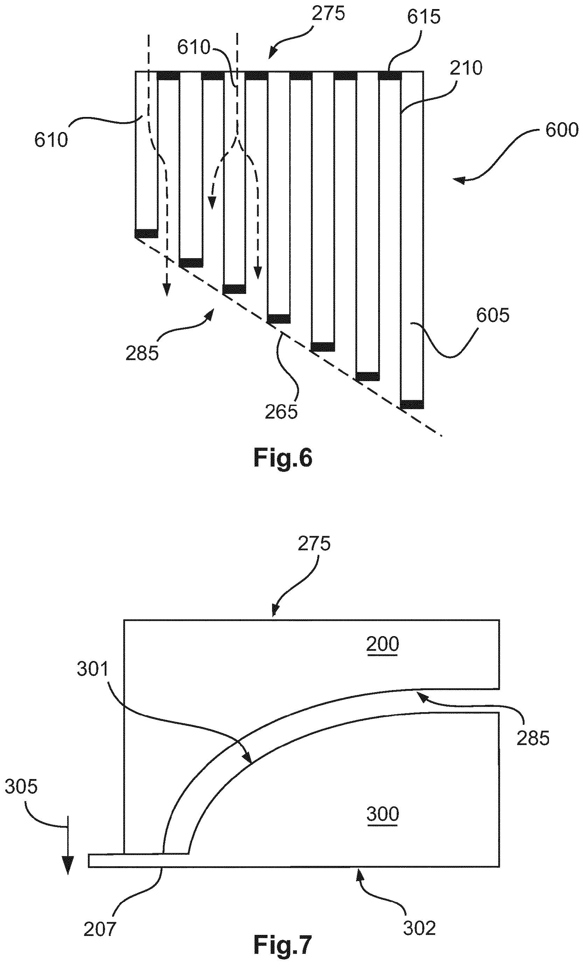

Fig. 6 zeigt eine Seitenansicht eines Flötenfilterelementes 600, wobei die Abströmfläche 285 entlang der Einhüllenden 265 so verläuft, dass die Filterkammern 605 eine unterschiedliche Filterkammerntiefe aufweisen.

Das Flötenfilterelement 600 zeichnet sich dadurch aus, dass die Filterkammern 605 wechselweise auf der Anströmfläche 275 bzw. auf der Abströmfläche 285 geöffnet bzw. verschlossen sind. Damit verläuft die Luftfließrichtung 610 durch das Flötenfilterelement 600 so, dass die anströmende Luft auf der Anströmfläche 275 in diejenigen Filterkammern 605 eindringt, welche in Richtung der Anströmfläche 275 geöffnet sind, sodann durch das Filtermedium 210 in die benachbarten Filterkammern 605 dringt, welche auf der Anströmfläche geschlossen und auf der Abströmfläche 285 geöffnet sind, wo die Luft das Flötenfilterelement 600 verlässt.

Die Anströmfläche 275 bei einem Flötenfilterelement wird durch die anströmseitigen Öffnungen der Filterkammern gebildet und analog dazu wird die Abströmfläche 285 durch die abströmseitigen Öffnungen der Filterkammern gebildet.

Die Filterkammern 605 des Flötenfilterelementes 600 zeichnen sich in der in Fig. 6 gezeigten Darstellung insbesondere dadurch aus, dass sie in einer Richtung von der Anströmfläche 275 zu der Abströmfläche 285 eine unterschiedliche Filterkammertiefe aufweisen.

Fig. 7 zeigt ein Luftfilterelement 200, welches mit dem Funktionsbauteil 300 in einem funktionalen Zusammenhang derart steht, dass das Luftfilterelement 200 auf der Abströmfläche 285 so geformt ist, dass wenigstens ein Teil des Luftfilterelementes 200 den Filterkragen 207 des Funktionsbauteils 300 entlang einer Andruckrichtung 305 drückt bzw. fixiert.

Damit kann beispielsweise erreicht werden, dass das Funktionsbauteil innerhalb des Gehäuses des Luftfilters in seiner Position gehalten wird oder überhaupt erst positioniert wird.

Die Einhüllende der Abströmfläche 285 des Luftfilterelementes 200 und die Einhüllende der Anströmfläche 301 des Funktionsbauteils 300 sind jeweils so geformt, dass sie einen korrespondierenden bzw. analogen Verlauf aufweisen. Damit wird insbesondere sichergestellt, dass das Volumen bzw. der Raum des Gehäuses des Luftfilters effizient ausgenutzt wird und das Hauptelement 200 und das Funktionsbauteil 300 bzw. das Zusatzfilterelement 310 eine möglichst große Filterfläche, d. h. eine möglichst große Oberfläche des Filtermediums, aufweisen.

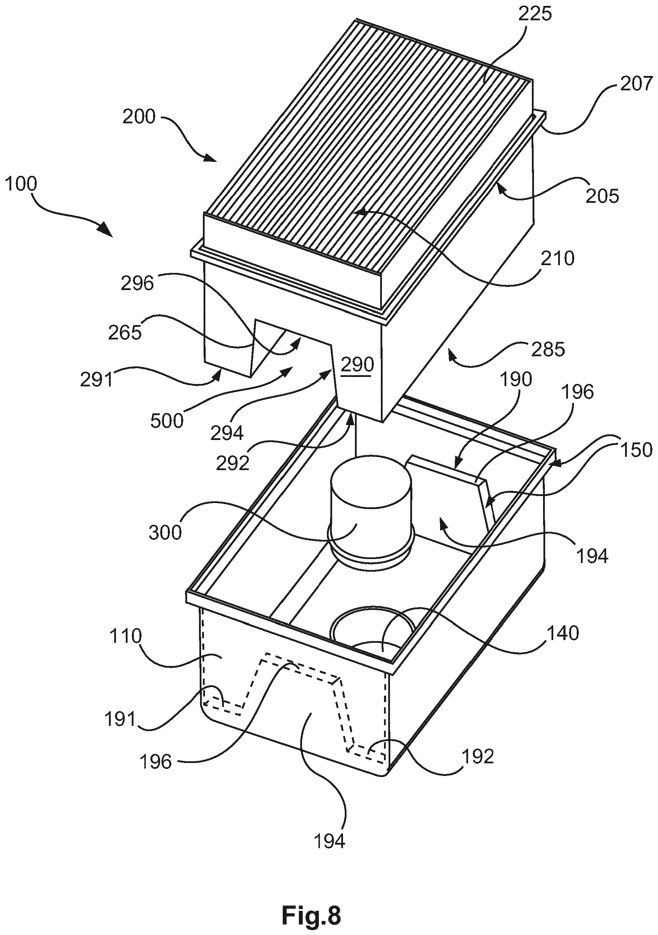

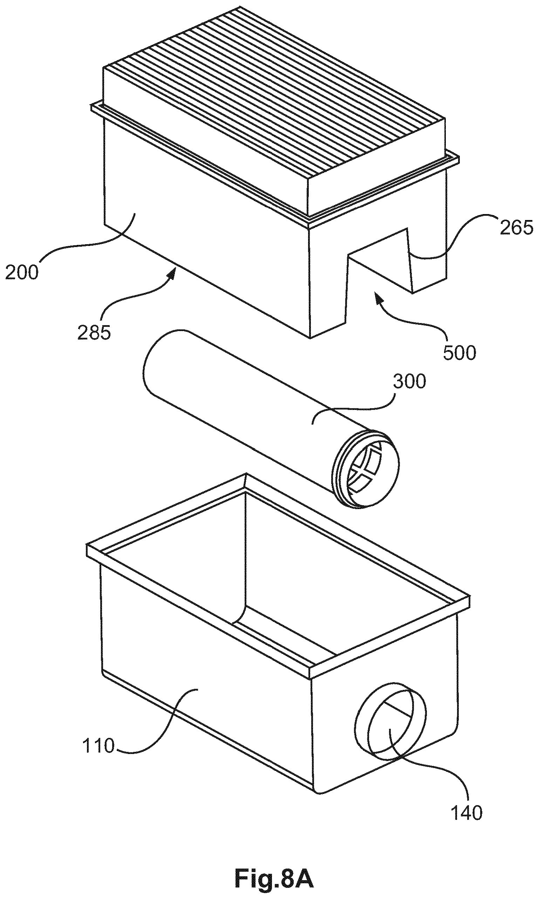

Fig. 8 zeigt eine isometrische Ansicht eines Luftfilterelementes 200, eines Funktionsbauteils 300 und eines Gehäusekörpers 110 eines Luftfilters.

Das Luftfilterelement 200 weist einen umlaufenden Filterkragen 207 auf, welcher in die Luftfilterelementaufnahme 150 des Gehäusekörpers 110 eingreift, wenn das Luftfilterelement in den Gehäusekörper eingesetzt wird. Ebenso greift die Luftfilterelementaufnahme 150 in die Einbuchtung 294 des Stützelementes ein. An dem Filterkragen 207 bzw. an dem Luftfilterelement ist weiterhin eine Dichtung 205 entlang des Filterkragens angebracht, so dass die Dichtung 205 den Gehäusekörper 110 beim Einsetzen des Luftfilterelementes 200 dichtend an dem Gehäusekörper 110 abschließt.

Das Luftfilterelement 200 weist ein Filtermedium 210 auf, welches Filtermedium so gefaltet ist, dass in Richtung des Funktionsbauteils 300 an der Abströmfläche des Luftfilterelements ein Freivolumen 500 gebildet wird, wobei das Freivolumen 500 von der Einhüllenden 265 umgeben ist.

Senkrecht zu den Faltenkanten 225 des Filtermediums 210 verläuft ein Stützelement 290 bzw. eine Stützstruktur 290 mit der Einbuchtung 294, um zum einen die Filterfalten an ihren seitlichen Öffnungen dichtend abzuschließen, damit keine ungefilterte Luft seitlich an den Filterfalten des Filters passieren bzw. vorbeiströmen kann. Weiterhin fällt dem Stützelement 290 bzw. der Stützstruktur 290 die Aufgabe zu, das Luftfilterelement 200 und das Filtermedium 210 zu stabilisieren. Ebenso ermöglicht das Stützelement 290 das Positionieren bzw. das Fixieren des Luftfilterelementes 200 beim Einsetzen in den Gehäusekörper 110 bzw. nach dem Einsetzen in den Gehäusekörper 110.

Das Positionieren des Luftfilterelementes 200 erfolgt durch die Halteflächenaufnahme 190 des Gehäusevorsprungs 194, wobei die Halteflächenaufnahme 190 dem Verlauf der Einhüllenden 265 des Luftfilterelementes 200 bzw. der Einbuchtung 294 angepasst ist. Beim Einsetzen des Luftfilterelementes 200 in den Gehäusekörper 110 greift also die Halteflächenaufnahme 190 in die Einbuchtung 294 des Stützelementes 290 und positioniert bzw. fixiert das Luftfilterelement in dem Gehäusekörper.

Die Halteflächenaufnahme 190 kann beispielsweise auf dem Gehäusevorsprung 194 angeordnet sein, wobei der Gehäusevorsprung eine Vertiefung der Gehäusekörperwand von außen nach innen darstellen kann, so dass diese Vertiefung in das Freivolumen 500 bzw. in die Einbuchtung 294 eingreift.

Weiterhin weist das Stützelement 290 eine erste Haltefläche 291, eine zweite Haltefläche 292 und eine dritte Haltefläche 296 auf, wobei die erste Haltefläche 291 ausgeführt ist, von einer Halteflächenaufnahme 191 in dem Gehäusekörper 110 aufgenommen zu werden, wobei die zweite Haltefläche 292 ausgeführt ist, von einer Halteflächenaufnahme 192 und wobei die dritte Haltefläche 296 ausgeführt ist, von einer Halteflächenaufnahme 196 in dem Gehäusekörper aufgenommen zu werden.

Damit ruht das Luftfilterelement 200 über die Halteflächen 291, 292 auf bzw. an den Halteflächenaufnahmen 191, 192 in dem Gehäusekörper 110 in einem eingesetzten Zustand des Luftfilterelementes in den Gehäusekörper.

Das Funktionsbauteil 300 ist in Form eines Kreiszylinders ausgeführt und ragt von der Ausströmöffnung 140 in das Innere des Gehäusekörpers 110 hinein. Dabei erstreckt sich eine axiale Richtung des Funktionsbauteils 300 parallel zu der Abströmrichtung an der Abströmfläche 285 des Luftfilterelementes 200 und parallel zu einer axialen Richtung der Ausströmöffnung 140. Zudem ist die Abströmrichtung an der Abströmfläche 285 des Luftfilterelementes 200 parallel oder zumindest in einem spitzen Winkel zu einer axialen Richtung der Ausströmöffnung 140. In anderen Worten erstreckt sich die axiale Richtung des Funktionsbauteils in Richtung der Filterkanten der Abströmfläche des Hauptelementes 200. In anderen Worten befindet sich damit die Ausströmöffnung 140 an dem Gehäusekörper 110 gegenüber der Abströmfläche 285 des Luftfilterelementes 200. Damit ändert sich eine hauptsächliche Luftströmungsrichtung zwischen Luftfilterelement 200 und Ausströmöffnung 140 nicht und wird beibehalten, wenn die Luft über die Abströmfläche durch die Ausströmöffnung strömt.

Um Platz für das Funktionsbauteil im Inneren des Gehäusekörpers bei eingesetztem Luftfilterelement 200 zu schaffen, weist das Luftfilterelement das Freivolumen 500 auf.

Fig. 8A zeigt ein Luftfilterelement 200, ein Funktionsbauteil 300 und einen Gehäusekörper 110. Das Funktionsbauteil ist ein Zylinder mit kreisförmiger Grundfläche, dessen axiale Richtung sich parallel zu dem Verlauf der Filterkanten der Abströmfläche 285 erstreckt.

Die Ausströmöffnung 140 befindet sich dabei an einer Wand des Gehäusekörpers 110, so dass der Luftstrom ausgehend von der Abströmfläche 285 umgelenkt werden muss, um die Ausströmöffnung 140 zu passieren.

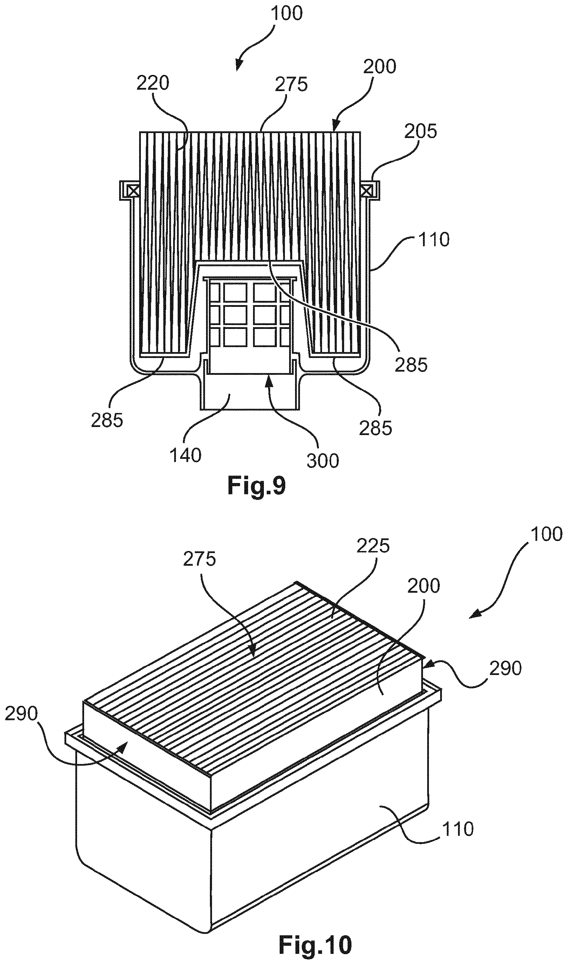

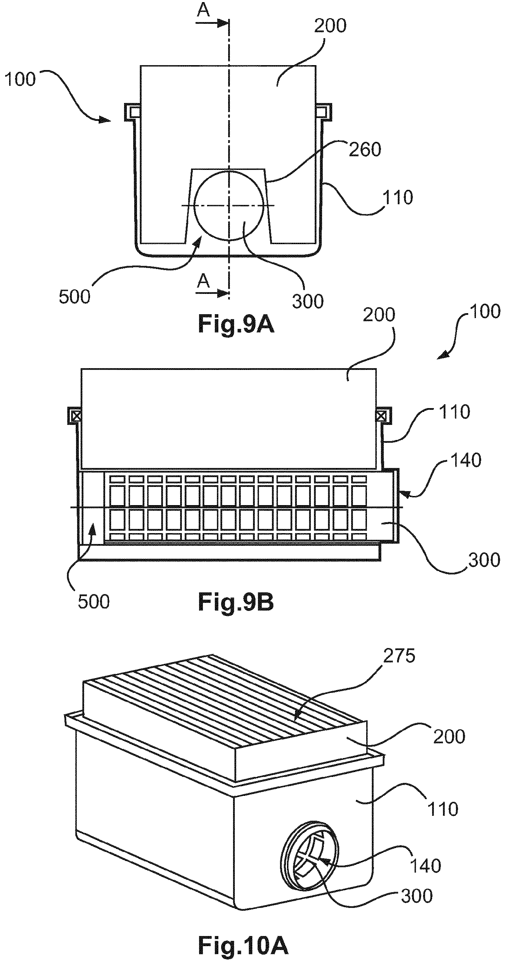

Fig. 9 zeigt eine Schnittdarstellung eines Gehäusekörpers 110 mit einem Luftfilterelement 200 und einem Funktionsbauteil 300, wie in Fig. 8 gezeigt, wobei das Funktionsbauteil und das Luftfilterelement in den Gehäusekörper eingesetzt sind.

Das Funktionsbauteil 300 ist dichtend auf die Ausströmöffnung 140 aufgesetzt. Damit muss Luft, welche das Luftfilterelement 200 an der Abströmfläche 285 verlässt, durch das Funktionsbauteil strömen, um den Gehäusekörper über die Ausströmöffnung 140 verlassen zu können.

Das Luftfilterelement 200 ist mit dem Gehäusekörper 110 über die Dichtung 205 dichtend abgeschlossen und die Filterfalten 220 weisen eine jeweilige Faltentiefe derart auf, dass die Filterfalten das Funktionsbauteil 300 umgeben.

Dabei sei insbesondere darauf hingewiesen, dass die Faltenkanten bzw. jede Faltenkante für sich keinen gekrümmten Verlauf aufweisen, d. h. dass die Faltenkanten in einer Richtung in die Zeichenebene hinein bzw. aus der Zeichenebene heraus senkrecht verlaufen.

Fig. 9A zeigt eine Schnittdarstellung eines Gehäusekörpers 110 mit einem Luftfilterelement 200 und einem Funktionsbauteil 300, wie in Fig. 8A gezeigt, wobei das Funktionsbauteil und das Luftfilterelement in den Gehäusekörper eingesetzt sind.

Das Funktionsbauteil erstreckt sich dabei in dem Freivolumen 500 des Luftfilterelementes, und zwar parallel zu dem Filterkantenverlauf der Abströmfläche 285, d.h. in einer Richtung aus der Zeichenebene heraus bzw. in die Zeichenebene hinein.

Fig. 9B zeigt eine Schnittdarstellung der Schnittlinie A-A aus Fig. 9A.

Wie deutlich zu erkennen ist, erstreckt sich das Funktionsbauteil in dem Freivolumen 500. Das Funktionsbauteil kann dabei eine beliebige Erstreckung innerhalb des Freivolumens 500 aufweisen, wobei eine möglichst große Ausnutzung des räumlichen Volumens des Freivolumens 500 durch das Funktionsbauteil mit einer erhöhten Oberfläche des Funktionsbauteils, beispielsweise einer Filterfläche eines Zusatzfilterelementes, einhergeht, wodurch sich insgesamt die funktionale Leistung des Funktionsbauteils oder Zusatzfilterelementes verbessern kann.

Fig. 10 zeigt eine isometrische Ansicht eines Gehäusekörpers mit eingesetztem Luftfilterelement 200. Das Luftfilterelement 200 weist zwei Stützelemente 290 auf, welche jeweils seitlich an dem Luftfilterelement 200 und senkrecht zu den Faltenkanten 225 der Anströmfläche 275 angeordnet sind. Natürlich verlaufen die Faltenkanten der Abströmfläche ebenfalls senkrecht zu den Stützelementen 290.

Fig. 10A zeigt analog zu Fig. 10 eine isometrische Ansicht des Gehäusekörpers mit eingesetztem Luftfilterelement 200 aus den Fig. 8A, 9A und 9B. Es ist zu erkennen, dass die Ausströmöffnung 140 an einer Wand des Gehäusekörpers 110 angeordnet ist, welche senkrecht zu dem Filterfaltenverlauf auf der Anströmfläche 275 und entsprechend auf der Abströmfläche 285 verläuft. Durch das Freivolumen 500 in dem Luftfilterelement 200 wird das in dem Gehäusekörper 110 zur Verfügung stehende Volumen so ausgenutzt, dass sowohl das Funktionsbauteil 300 als auch das Hauptelement 200 innerhalb des Gehäusekörpers angeordnet sind und beim Hauptelement eine maximale Filterfläche des Filtermediums erzielt wird.

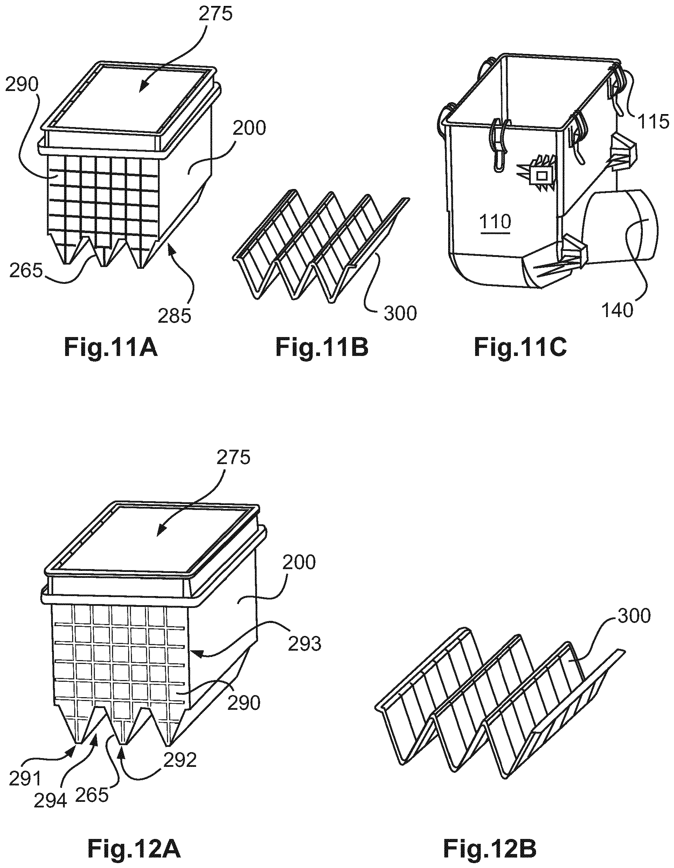

Fig. 11A zeigt eine isometrische Ansicht eines Luftfilterelementes 200, wobei das Stützelement 290 an. der Abströmfläche 285 einen Verlauf gem. der Einhüllenden 265 aufweist.

Fig. 11B zeigt ein Funktionsbauteil 300, welches mit dem Verlauf der Einhüllenden 265 des Luftfilterelementes 200 aus Fig. 11A korrespondiert.

Fig. 11C zeigt einen Gehäusekörper 110, welcher ausgeführt ist, das Funktionsbauteil 300 und das Luftfilterelement 200 aus den Fig. 11B bzw. 11A aufzunehmen.

Dabei weist der Gehäusekörper 110 eine Mehrzahl von Verschlusselementen 115 auf, um einen Gehäusedeckel mit dem Gehäusekörper zu verschließen. Weiterhin weist der Gehäusekörper 110 eine Ausströmöffnung bzw. einen Reinluftanschluss 140 auf.

Durch den sägezahnförmigen Verlauf der Oberfläche des Funktionsbauteils 300 aus Fig. 11D und den damit korrespondierenden Verlauf der Einhüllenden 265 der Abströmfläche 285 des Luftfilterelementes 200 aus Fig. 11A wird ermöglicht, dass das Funktionsbauteil 300 eine erhöhte Oberfläche und damit eine verbesserte Filterleistung im Vergleich zu einem ebenen bzw. flachen Funktionsbauteil aufweist und dennoch das Volumen, welches innerhalb des Gehäusekörpers 110 zur Verfügung steht, effizienter ausgenutzt wird.

Fig. 12A zeigt ein Luftfilterelement 200 mit einer Stützstruktur 290.

Die Stützstruktur 290 weist an der Abströmfläche 285 einen Verlauf entlang der Einhüllenden 265 auf. Weiterhin weist die Stützstruktur 290 eine erste Haltefläche 291 und eine zweite Haltefläche 292 auf, wobei sich zwischen der ersten Haltefläche 291 und der zweiten Haltefläche 292 die Einbuchtung 294 befindet bzw. angeordnet ist. Die Einbuchtung 294 entspricht im Wesentlichen dem Verlauf der Einhüllenden 265 einem Freivolumen 500 des Luftfilterelementes. Die erste Haltefläche und die zweite Haltefläche sind ausgeführt, das Luftfilterelement 200 über die Stützstruktur 290 mit dem Gehäusekörper des Luftfilters zu fixieren bzw. zu positionieren.

Aufgrund von Vibrationen des Filtermediums des Luftfilterelementes 200 im Zuge des Filtervorgangs sind Berührungen des Filtermediums mit dem Gehäusekörper des Luftfilters zu vermeiden, da ansonsten das Filtermedium beschädigt werden kann. Damit dienen die erste Haltefläche 291 und die zweite Haltefläche 292 der Positionierung des Luftfilterelementes 200, ohne dass das Filtermedium einer Berührung mit dem Gehäusekörper ausgesetzt ist.

Fig. 12B zeigt ein Funktionsbauteil 300, welches mit dem Verlauf der Einhüllenden 265 des Luftfilterelementes 200 aus Fig. 12A korrespondiert.

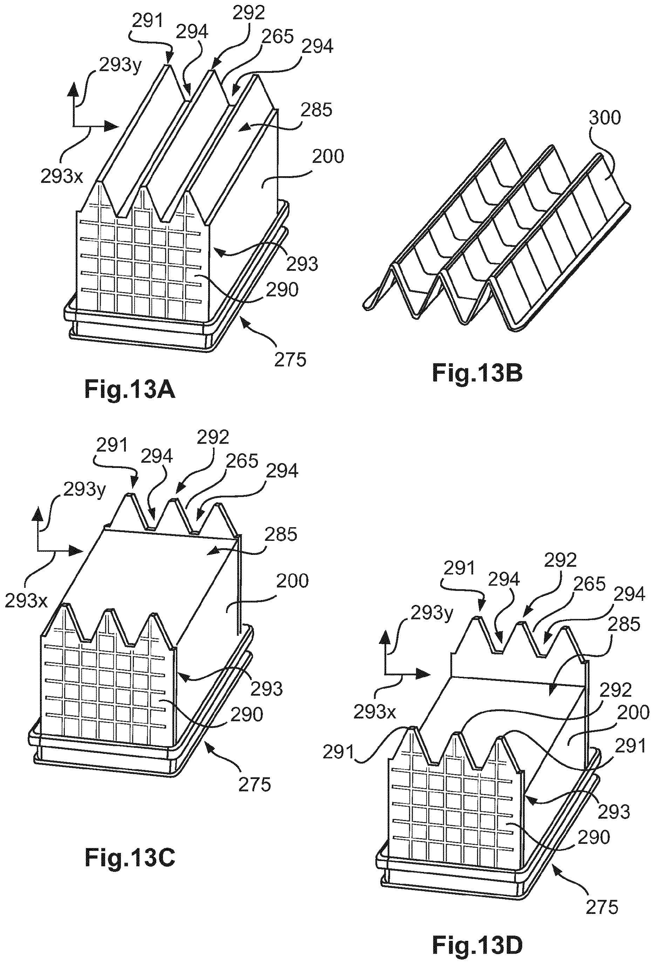

Fig. 13A zeigt eine isometrische Darstellung eines Luftfilterelementes 200. Das Stützelement 290 erstreckt sich dabei entlang einer Erstreckungsfläche 293, welche durch die Vektoren 293x und 293y aufgespannt wird.

Damit verläuft die Erstreckungsfläche 293 einer Stützstruktur 290 so, dass die Faltenkanten der Anströmfläche 275 und der Abströmfläche 285 senkrecht zu der Erstreckungsfläche 293 der Stützelemente 290 eines Luftfilterelementes 200 verlaufen.

Die Einhüllende 265 der Abströmfläche 285 entspricht einem Verlauf der Einbuchtungen 294 an dem Stützelement 290. Ebenso wie die erste Haltefläche 291 und die zweite Haltefläche 292 dienen die Einbuchtungen 294 der Fixierung und der Positionierung des Luftfilterelementes innerhalb des Gehäusekörpers.

Fig. 13B zeigt ein Funktionsbauteil 300, welches dem Verlauf der Einhüllenden 265 der Abströmfläche 285 des Luftfilterelementes 200 aus Fig. 13A entspricht.

Fig. 13C zeigt ein Luftfilterelement 200, wobei die Abströmfläche 285 sich als Ebene zwischen den Stützelementen 290 erstreckt. Die Filterkanten des Luftfilterelementes verlaufen im Zuge einer Ebene auf der Abströmfläche 285, dies bedeutet, dass die Faltentiefe aller Falten des Luftfilterelementes gleich ist.

Die Faltentiefe bzw. die Lage der Faltenkanten auf der Abströmfläche 285 und die Abströmfläche 285 an sich sind dabei so angeordnet, dass die Abströmfläche 285 mit sämtlichen ihr zugehörigen Faltenkanten sich ausgehend von der ersten Haltefläche 291 und der zweiten Haltefläche 292 sowie den Einbuchtungen 294 in einer Richtung zu der Anströmfläche 275 versetzt sind. Dies bedeutet, dass die Halteflächen 291, 292 und die Einbuchtungen 294 sich ausgehend von der Abströmfläche 285 in Richtung der Strömungsrichtung, welche von der Abströmfläche weg zeigt, erstrecken. Damit können die Haltefläche 291, 292 tiefer in einen Gehäusekörper eines Luftfilters hineinragen, als dies das Filtermedium bzw. die Faltenkanten der Abströmfläche 285 tun.

Die Abströmfläche 285 kann so angeordnet sein, dass die auf ihr befindlichen Faltenkanten des Filtermediums genau auf Höhe der Einbuchtungen 294 angeordnet sind.

Fig. 13D zeigt ein Luftfilterelement 200 analog zu dem Luftfilterelement 200 in Fig. 13C, wobei in Fig. 13D die Abströmfläche 285 nicht auf Höhe der Einbuchtungen 294 angeordnet ist, sondern einen bestimmten Abstand von der Einbuchtung aufweist.

Damit ragen von dem Luftfilterelement 200 beim Einsetzen in einen Gehäusekörper nicht nur die Halteflächen 291, 292 tiefer als die Abströmfläche 285 in den Gehäusekörper, sondern auch ein Teil der Stützelemente 290.

Die Fig. 13C und 13D zeigen damit einen Aufbau eines Luftfilterelementes, bei welchem sich die Abströmfläche 285 näher an der Anströmfläche 275 befindet als die Halteflächen 291, 292 und die Einbuchtungen 294 bzw. bei welchem sich die Anströmfläche 285 in einer Strömungsrichtung der Luft durch das Luftfilterelement 200 zwischen der Anströmfläche 275 und den Halteflächen 291, 292 sowie den Einbuchtungen 294 befindet.

Es sei darauf hingewiesen, dass der Abstand der Abströmfläche 285 von den Halteflächen 291, 292 und den Einbuchtungen 294 der Stützelemente variabel gestaltet sein kann und z.B. an die Gegebenheiten und baulichen Auflagen innerhalb des Gehäusekörpers angepasst werden kann.

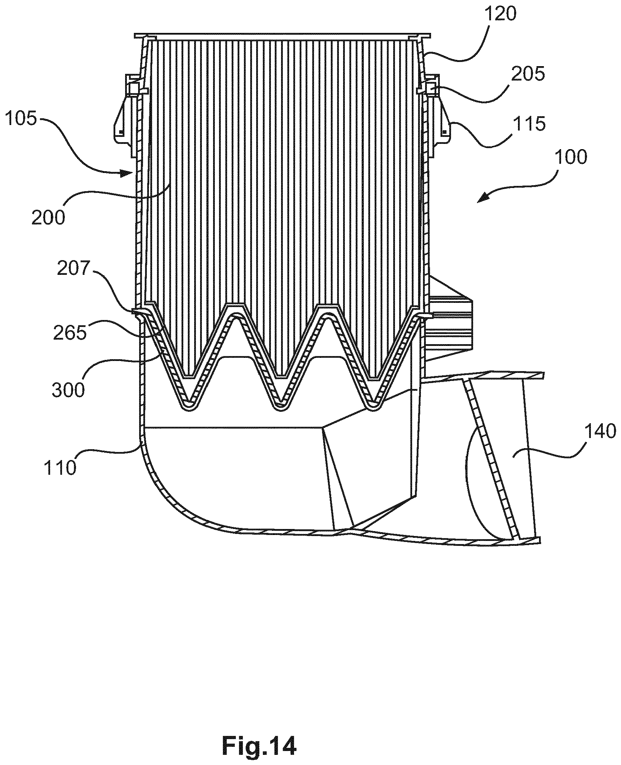

Fig. 14 zeigt eine Schnittansicht eines Luftfilters 100. Das Gehäuse 105 weist den Gehäusedeckel 120 und den Gehäusekörper 110 auf, wobei der Gehäusekörper und der Gehäusedeckel mittels Verschlusselementen 115 aneinander fixiert bzw. welche verschlossen werden und eine Dichtung 205 das Gehäuse zwischen Gehäusekörper und Gehäusedeckel dichtend verschließt.

Innerhalb des Gehäusekörpers befindet sich das Hauptelement 200 bzw. das Luftfilterelement 200, dessen Abströmfläche die Form der Einhüllenden 265 aufweist und mit der Form des Funktionsbauteils 300 korrespondiert. Das Funktionsbauteil 300 ist mittels des Filterkragens 207 mit dem Gehäusekörper 110 verbunden.

Die Luft, welche durch das Luftfilterelement 200 und das Funktionsbauteil 300 geströmt ist, verlässt den Luftfilter 100 durch die Ausströmöffnung 140.

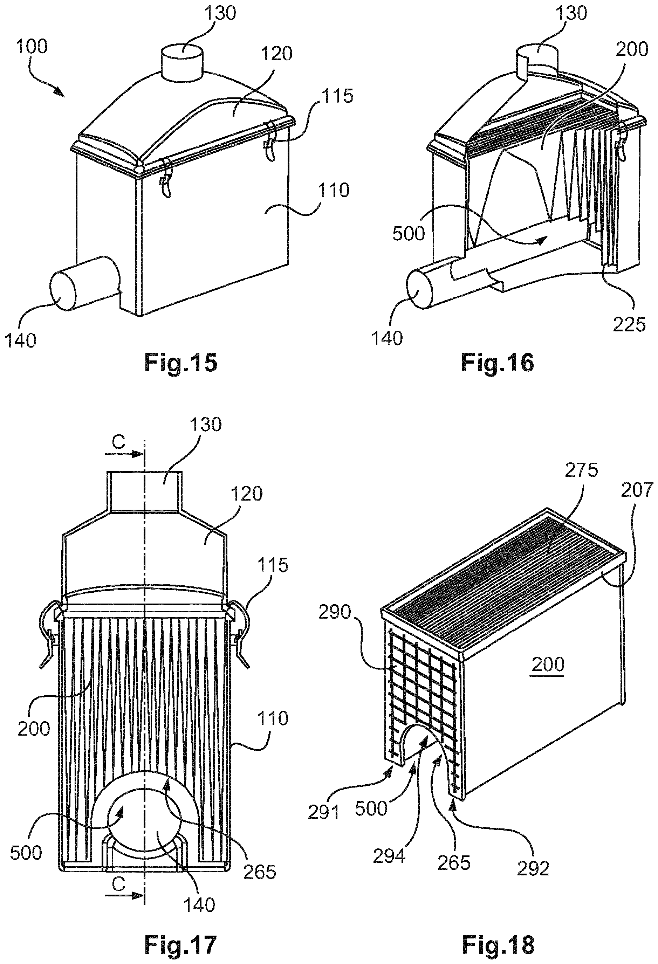

Fig. 15 zeigt eine isometrische Darstellung eines Luftfilters 100, wobei der Luftfilter einen Gehäusekörper 110, einen Gehäusedeckel 120 und Verschlusselemente 115 zum Verschließen des Gehäusekörpers mit dem Gehäusedeckel aufweist. An dem Gehäusedeckel 120 ist eine erste Einströmöffnung 130 angeordnet und an dem Gehäusekörper 110 ist eine Ausströmöffnung 140 angeordnet. Die Rohluft strömt durch die Einströmöffnung 130 in den Luftfilter bzw. das Gehäuse hinein, wird im Luftfilter gefiltert und verlässt den Luftfilter durch die Ausströmöffnung bzw. den Reinluftanschluss 140.

Fig. 16 zeigt eine Schnittansicht einer isometrischen Darstellung des Luftfilters 100 aus Fig. 15. Innerhalb des Gehäusekörpers 110 ist das Luftfilterelement 200 angeordnet, wobei die zu filternde Luft das Luftfilterelement 200 aus Richtung der Einströmöffnung 130 passiert und den Gehäusekörper durch die Ausströmöffnung bzw. den Reinluftanschluss 140 verlässt.

Das Luftfilterelement 200 weist im Bereich der Ausströmöffnung 140 ein Freivolumen 500 auf. Im Bereich des Freivolumens 500 bilden die Faltenkanten 225 auf der Abströmfläche 285 des Luftfilterelementes 200 eine Einhüllende und somit ein Freivolumen des Luftfilterelementes, wobei das Profil des Luftfilterelementes bzw. der Verlauf der Einhüllenden auf der Abströmfläche der Position und der Ausströmrichtung des Reinluftanschlusses 140 angepasst ist, damit keine Stoßkante oder starke Umlenkung der Luftströmung, welche das Luftfilterelement 200 an der Abströmfläche verlässt, entsteht. Durch die gegenseitige Abstimmung der Position der Ausströmöffnung 140 und der Geometrie des Luftfilterelementes 200, d. h. dem Verlauf und der Größe des Freivolumens 500, kann die Luftströmung durch den Luftfilter und innerhalb des Gehäuses des Luftfilters optimiert werden und ein Druckverlust der durch den Luftfilter strömenden Luft vermindert werden.

Das Freivolumen 500 ermöglicht damit, dass der Luftstrom das Luftfilterelement 200 zunächst an der Abströmfläche verlässt und dann in Richtung der Ausströmöffnung 140 strömen kann, wobei das Freivolumen 500 an die Lage und die Größe der Ausströmöffnung 140 angepasst werden kann. Das Luftfilterelement 200 mit Falten von variabler Faltentiefe kann dabei einem Verlust von Filterfläche entgegenwirken, da das Freivolumen 500 lediglich an die Größe der Ausströmöffnung 140 angepasst ist und nicht eine Reduzierung der Faltentiefe aller Filterfalten erfolgt.

Fig. 17 zeigt eine Schnittansicht des Luftfilters aus Fig. 16. Wie eindeutig zu erkennen ist, weist die Ausströmöffnung 140 einen kreisförmigen Verlauf auf und die Einhüllende 265 verläuft so, dass das Freivolumen 500 an den Verlauf und die Geometrie der Ausströmungsöffnung 140 angepasst ist. Damit wird sichergestellt, dass die durch das Luftfilterelement 200 strömende Luft die Filterfalten an der Abströmfläche verlassen hat, bevor der Luftstrom in Richtung der Ausströmöffnung 140 umgelenkt wird. Insbesondere kann sich eine verbesserte Umlenkung der Luftströmung, welche an der Abströmfläche des Luftfilterelementes 200 vorliegt, dadurch ergeben, dass auch die Stützstruktur entlang der Einhüllenden 265 verläuft. Damit bildet das Freivolumen 500 einen Raum bzw. Hohlraum innerhalb des Gehäusekörpers 110, in welchem eine Umlenkung der Luftströmung, welche Luftströmung beim Verlassen des Luftfilterelementes 200 senkrecht zu den Faltenkanten 225 auf der Abströmfläche 285 verläuft, dahingehend, dass die Luftströmung parallel zu dem Verlauf der Faltenkanten 225 auf der Abströmfläche 285 verläuft, da die Ausströmöffnung 140 einen Verlauf der Luftströmung parallel zu den Faltenkanten erfordert.

Fig. 18 zeigt eine isometrische Ansicht eines Luftfilterelementes 200 mit einem halbkreisförmigen Freivolumen 500. Das Luftfilterelement 200 aus Fig. 18 entspricht dabei dem Aufbau des Luftfilterelementes 200 in den Figuren 15 bis 17.

Die Stützstruktur 290 weist eine erste Haltefläche 291 und eine zweite Haltefläche 292 auf, wobei sich zwischen den Halteflächen 291, 292 eine Einbuchtung 294 befindet, welche Einbuchtung 294 dem Verlauf der Einhüllenden 265 entspricht bzw. mit dem Verlauf der Einhüllenden 265 korreliert.

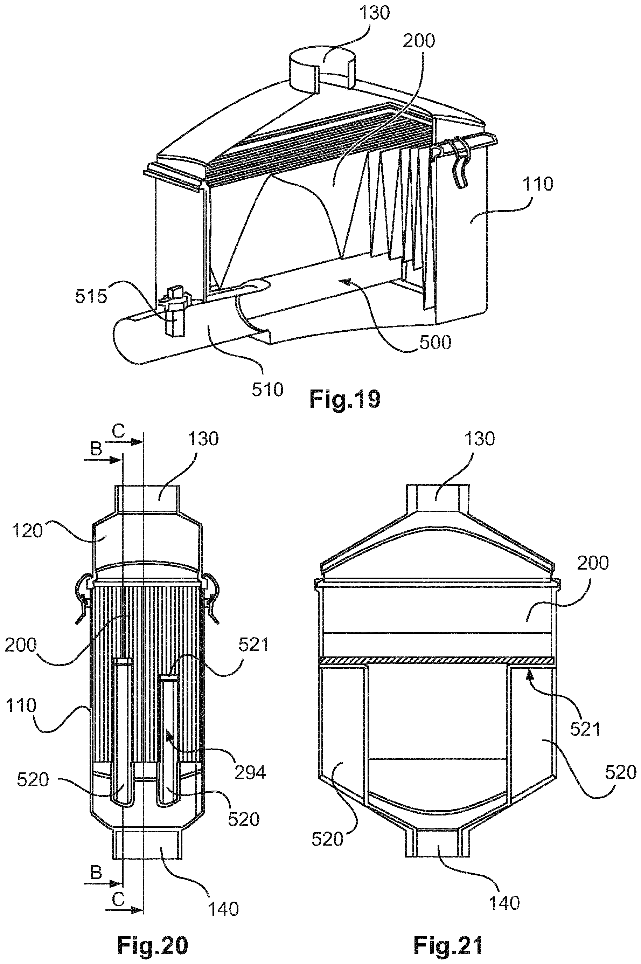

Fig. 19 zeigt einen Luftfilter mit einem Gehäusekörper 110, wobei ein Strömungsgleichrichter 510 durch eine Wand des Gehäusekörpers in das Innere des Luftfilters bzw. des Gehäusekörpers hineinragt.

Bei dem Strömungsgleichrichter 510 kann es sich beispielsweise um eine sog. Einströmtulpe handeln, welche in das Gehäuse hineinragt, damit sich die ausströmende Luft vor dem Passieren eines Luftmassenmessers 515 beruhigt, d. h. dass ein gleichmäßiger Luftfluss erzielt wird, ohne dass der Luftmassenmesser eine große Entfernung von der Gehäusewand aufweisen muss.

Für zuverlässige Messergebnisse des Luftmassenmessers 515 ist anzustreben, dass die an dem Luftmassenmesser vorbeiströmende Luft frei von Turbulenzen und unregelmäßigen Luftströmungen bzw. Luftströmungsverläufen ist. Daher erfordert das Anbringen eines Luftmassenmessers, dass die vorbeiströmende Luft gleichmäßig strömt. Dies kann beispielsweise dadurch erreicht werden, dass ein Strömungsgleichrichter in Form eines Rohres benutzt wird, wobei die durch dieses Rohr strömende Luft im Wesentlichen in eine Strömungsrichtung strömt, so dass die strömende Luft frei von Turbulenzen durch dieses Rohr strömt. Zusätzlich kann ein im Rohr angeordnetes Gitter 511 (in Fig. 19 nur angedeutet) Turbulenzen reduzieren.

Verlässt die gefilterte Luft auf der Abströmfläche das Luftfilterelement 200, dann muss diese Luft im Filter in der Fig. 19 zunächst umgelenkt werden, da die Ausströmöffnung 140 orthogonal zu der Abströmrichtung der Luft verläuft. Durch diese Umlenkung des Luftstromes entstehen Turbulenzen, so dass der Luftmassenmesser 515 nicht direkt bzw. unmittelbar dort an der Ausströmöffnung bzw. an dem Reinluftanschluss 140 angebracht werden kann, wo die Luft in die Ausströmöffnung hineinströmt.

Dadurch, dass der Strömungsgleichrichter bzw. die Einströmtulpe 510 in das Gehäuse bzw. den Gehäusekörper 110 hineinragt, kann der Luftmassenmesser in der Nähe der Gehäusewand des Gehäusekörpers 110 angebracht werden und dennoch eine strömungsfreie Strömung im Bereich des Luftmassenmessers ermöglicht werden.

Das Freivolumen 500 des Luftfilterelementes 200 kann entsprechend der geometrischen Form des Strömungsgleichrichters 510 angepasst werden. Damit ist die Einhüllende 265 der Faltenkanten auf der Abströmfläche des Luftfilterelementes 200 einem Querschnitt des Strömungsgleichrichters 510 angepasst. In anderen Worten bedeutet dies, dass sich die Einströmtulpe beispielsweise auch mittig in einer Wand des Gehäusekörpers befinden kann und von dem Luftfilterelement ringförmig bzw. halbkreisförmig umschlossen wird, wodurch für die Filterfläche des Luftfilterelementes eine maximale Größe gewählt werden kann und so durch die in den Gehäusekörper hineinragende Einströmtulpe kein wesentlicher Filterflächenverlust erfolgt. Es wird nicht die Faltentiefe aller Filterfalten an die Montageposition des Strömungsgleichrichters angepasst, sondern es weisen lediglich diejenigen Filterfalten eine geringere Faltentiefe auf, welche eine Querschnittsfläche der Strömungsgleichrichters überdecken.

Bei dem Luftmassenmesser 515 kann es sich beispielsweise um einen Heißfilm-Luftmassenmesser handeln. Hierbei erfolgt eine Luftmassenstrommessung über eine Änderung des elektrischen Widerstandes in einem Metallfilm, an welchem die Luft vorbeiströmt und diesen Metallfilm kühlt, wodurch sich der elektrische Widerstand des Metallfilms ändert und so eine Messung des Luftmassenstroms erfolgen kann.

Fig. 20 zeigt eine Seitenansicht eines Gehäusekörpers 110 mit Gehäusedeckel 120, wobei sich in dem Gehäusekörper ein Luftfilterelement 200 befindet.

Der Gehäusekörper 110 weist zwei Gehäuserippen 520 bzw. Gehäusestützrippen 520 mit jeweils einer Haltefläche 521 auf. Die Gehäuserippen 520 erstrecken sich in einer Längsrichtung zwischen der Anströmfläche und der Abströmfläche des Luftfilterelementes 200. Dabei ragen die Gehäuserippen 520 in Richtung des Verlaufs der Faltenkanten der Filterfalten in den Gehäusekörper 110 hinein, d.h. senkrecht zu der Anströmfläche und der Abströmfläche bzw. in Richtung des Stützelementes 290 des Luftfilterelementes 200.

Die Gehäusestützrippen 520 dienen der Versteifung und Formstabilität des Gehäusekörpers 110. Die Gehäuserippen 520 können eine variable Eindringtiefe in den Gehäusekörper aufzeigen und können sogar durchgängig in einer Verlaufsrichtung der Faltenkanten durch den Gehäusekörper verlaufen.

Die Gehäuserippen 520 weisen eine Haltefläche 521 auf, welche Haltefläche ausgeführt ist, eine Einbuchtung 294 des Stützelementes 290 des Luftfilterelementes 200 aufzunehmen und so das Luftfilterelement 200 innerhalb des Gehäusekörpers 110 zu positionieren und zu fixieren. Durch das Aufliegen der Einbuchtung 294 auf der Haltefläche 521 ist sichergestellt, dass die Filterfalten die Gehäusestützrippen nicht berühren, sondern die Gehäusestützrippen 520 lediglich von der Stützstruktur 290 berührt werden.

Fig. 21 zeigt eine Schnittansicht entlang der Schnittlinie B-B aus Fig. 20. Die Gehäuserippen 520 ragen jeweils seitlich in den Gehäusekörper 110 und das Luftfilterelement 200 hinein. Wie bereits oben dargestellt, kann die Eindringtiefe der Gehäuserippen 520 ein variables Maß aufweisen und beispielsweise auch durchgehend von einer Gehäusewand zu einer anderen Gehäusewand ausgeführt sein.

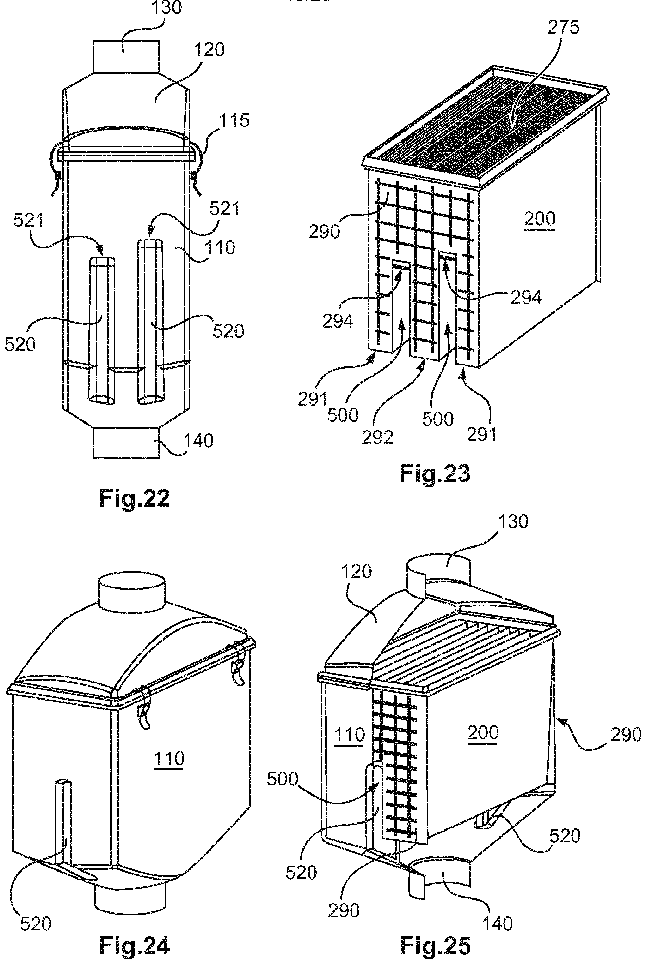

Fig. 22 zeigt eine Seitenansicht eines Gehäusekörpers 110 mit einem Gehäusedeckel 120. Der Gehäusekörper 110 weist zwei Gehäusestützrippen 520 auf, wobei eine erste Gehäusestützrippe 520 eine erste Haltefläche 521 und eine zweite Gehäusestützrippe 520 eine zweite Haltefläche 521 aufweist.

Die Gehäusestützrippen 520 können eine unterschiedliche Höhe, d.h. Erstreckung in Längsrichtung zwischen Anströmfläche und Abströmfläche des eingesetzten Luftfilterelementes, und insgesamt unterschiedliche geometrische Ausmaße, wie z.B. Breite, aufweisen.

Fig. 23 zeigt eine isometrische Ansicht eines Luftfilterelementes 200 passend zu dem Gehäusekörper 110 aus Fig. 22.

Das Luftfilterelement 200 weist zwei Freivolumen 500 auf, wobei ein erstes Freivolumen 500 bzw. eine erste Einbuchtung 294 von einer erste Haltefläche 291 und einer zweiten Haltefläche 292 gebildet wird und ein zweites Freivolumen 500 bzw. eine zweite Einbuchtung 294 von der zweiten Haltefläche 292 und einer weiteren Haltefläche 291 gebildet wird.

Fig. 24 zeigt eine isometrische Darstellung eines Luftfilters mit einem Gehäusekörper 110, wobei der Gehäusekörper 110 eine einzelne Gehäusestützrippe 520 aufweist.

Für die Ausführung des in Fig. 24 gezeigten Luftfilters gelten sinngemäß die Erläuterungen zu den Fig. 20 bis 23, mit dem Unterschied, dass Fig. 24 lediglich eine einzelne Gehäusestützrippe 520 zeigt.

Selbstverständlich kann ein Gehäusekörper 110 wie oben und im Folgenden beschrieben auch eine Mehrzahl von Gehäusestützrippen 520 aufweisen, insbesondere auch mehr Gehäusestützrippen als hier in den Figuren gezeigt, also beispielsweise drei oder mehr Gehäusestützrippen.

Fig. 25 zeigt eine Schnittansicht einer isometrischen Darstellung des Luftfilters aus Fig. 24.

Aus der Darstellung in Fig. 25 geht hervor, wie die Gehäusestützrippen 520 in das Luftfilterelement 200 eingreifen und das Luftfilterelement 200 über die Stützstruktur 290 in dem Gehäusekörper 110 fixieren. Dabei greifen die Gehäusestützrippen 520 von zwei Seiten in das Freivolumen 500 der Stützstruktur 290 bzw. des Luftfilterelementes 200.

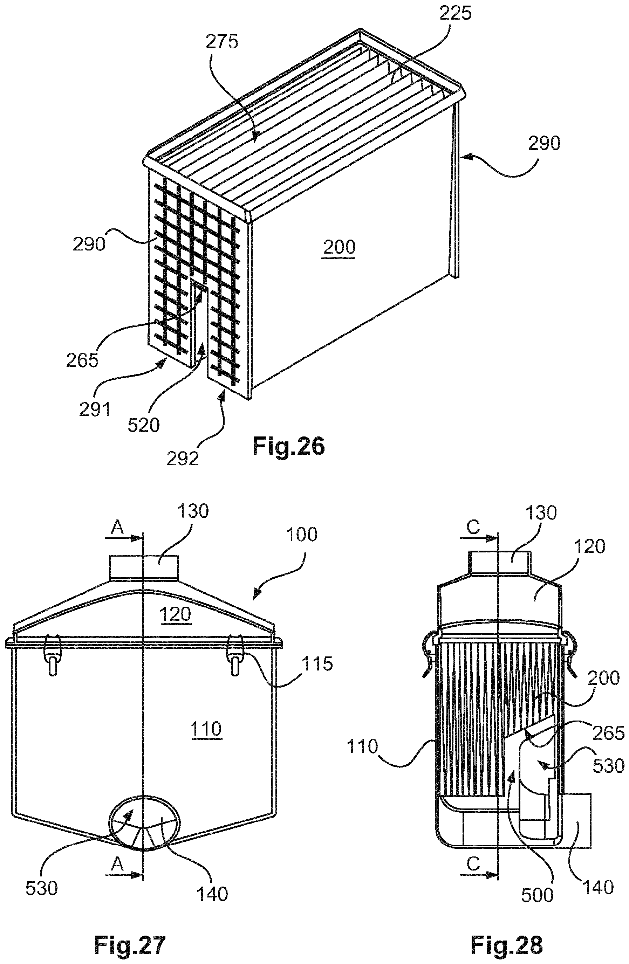

Fig. 26 zeigt eine isometrische Darstellung eines Luftfilterelementes 200 in Analogie zu der Darstellung in Fig. 25.

Das Luftfilterelement 200 weist zwei Stützelemente 290 auf, welche senkrecht zu einem Verlauf der Faltenkanten 225 auf der Anströmfläche 275 und der Abströmfläche 285 angeordnet sind.

An den Stützelementen 290 bzw. dem Luftfilterelement 200 bildet die Einhüllende 265 eine Einbuchtung 294 bzw. ein korrelierendes Freivolumen 500 für die Gehäusestützrippen 520, wobei die Einbuchtung 294 von der ersten Haltefläche 291 und der zweiten Haltefläche 292 gebildet wird.

Fig. 27 zeigt einen Luftfilter 100 mit einem Gehäusekörper 110 und einem Gehäusedeckel 120, welche mittels Verschlusselementen 115 miteinander verbunden sind. Innerhalb des Gehäusekörpers 110 befindet sich vor der Ausströmöffnung 140 ein Resonator 520 bzw. eine Hohlraumresonatorgeometrie 530, welche ausgeführt ist, Strömungsgeräusche der durch das Gehäuse strömenden Luft zu reduzieren.

Fig. 28 zeigt eine Schnittdarstellung eines Luftfilters entlang der Schnittlinie A-A aus Fig. 27.

Der Resonator 530 befindet sich innerhalb des Gehäusekörpers 110 in dem Freivolumen 500 entlang der Einhüllenden 265 an der Abströmfläche des Luftfilterelementes 200.

Ein Luftfilterelement mit Filterfalten von variabler Faltentiefe ermöglicht die Anbringung eines Resonators innerhalb des Gehäusekörpers und gleichzeitig die Maximierung der Filterfläche des Filtermediums des Luftfilterelementes. Der Resonator 530 befindet sich damit unmittelbar an der Ausströmöffnung 140 bzw. unmittelbar vor dem Anschluss einer externen Reinluftleitung. Damit wird eine nachträgliche Befestigung des Resonators an der Reinluftleitung oder auch an der Rohluftleitung außerhalb des Gehäuses vermieden und gleichzeitig die zur Verfügung gestellte Filterfläche des Luftfilterelementes 200 nur minimal reduziert, da das Freivolumen 500 auf die Ausmaße des Resonators 530 angepasst ist.

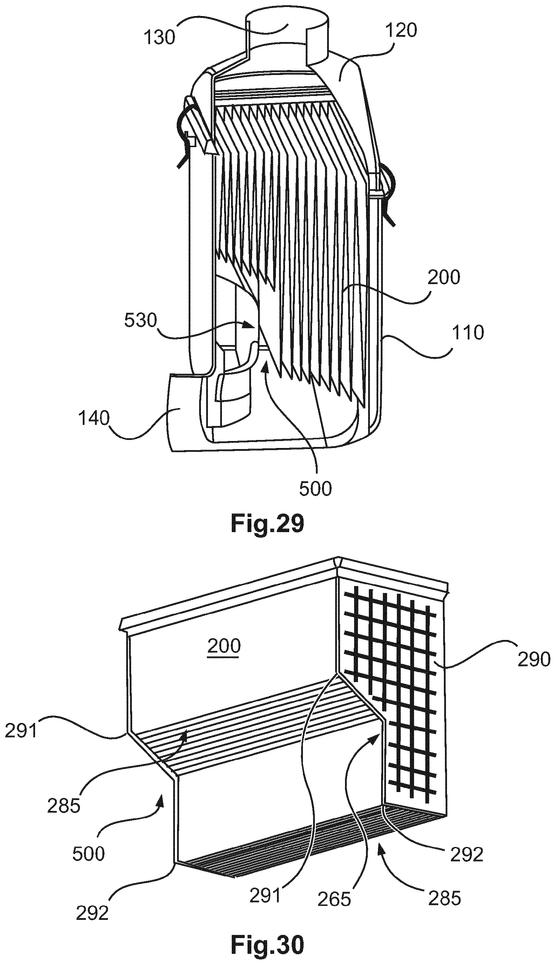

Fig. 29 zeigt eine Schnittansicht einer isometrischen Darstellung eines Luftfilters mit einem Gehäusekörper 110 und einem Gehäusedeckel 120, wobei sich innerhalb des Gehäusekörpers 110 ein Resonator 530 und ein Luftfilterelement 200 befindet. Dabei weist das Luftfilterelement 200 ein Freivolumen 500 auf, wobei das Freivolumen 500 an die räumlichen Ausmaße der Resonatorgeometrie 530 angepasst ist. Daneben, d.h. in einem Bereich des Gehäusekörpers, welcher nicht von der Resonatorgeometrie 530 beansprucht wird, weisen die Filterfalten des Luftfilterelementes 200 eine nicht reduzierte Filterfaltentiefe auf, so dass die Filterfläche des Filtermediums durch die Anbringung des Resonators 530 innerhalb des Gehäusekörpers 110 nur minimal reduziert wird.

Fig. 30 zeigt eine isometrische Darstellung eines Luftfilterelementes 200 aus den Figuren 27 bis 29. Wie deutlich zu erkennen ist, weisen die Abströmfläche 285 und die Stützelemente 290 des Luftfilterelementes ein Freivolumen 500 gem. dem Verlauf der Einhüllenden 265 auf, wobei das Freivolumen 500 ausgeführt ist, einen Resonator aufzunehmen.

Weiterhin sind an den Stützelementen 290 jeweils eine erste Haltefläche 291 und eine zweite Haltefläche 292 angeordnet, wobei zwischen den Halteflächen 291, 292 eine Einbuchtung des Stützelementes 290 korrelierend zu dem Freivolumen 500 angeordnet bzw. geformt ist.

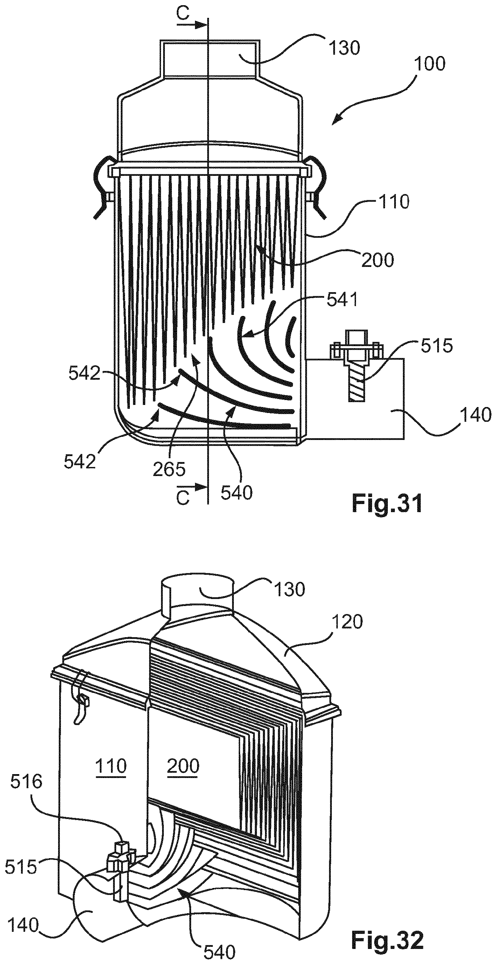

Fig. 31 zeigt einen Luftfilter 100, wobei sich in dem Gehäusekörper 110 ein Luftfilterelement 200 und eine Strömungsleitvorrichtung 540 bzw. Leitrippen 540 befinden.

Die Strömungsleitvorrichtung 540 weist eine Mehrzahl von Leitrippen auf, wobei jede Leitrippe eine Leitfläche 541 und eine Leitflächenkante 542 aufweist.

Die einzelnen Leitrippen der Strömungsleitvorrichtung 540 sind so angeordnet, dass sie eine Projektionsfläche der Abströmfläche 285 des Luftfilterelementes abdecken, um dadurch Turbulenzen oder Ungleichmäßigkeiten des Luftstroms hinter der Abströmfläche zu verhindern oder zu reduzieren. Damit ermöglicht das Anbringen einer Strömungsleitvorrichtung 540 die Herabsenkung einer Entfernung eines Luftmassenmessers 515 von dem Gehäusekörper 110 in der Ausströmöffnung 140.

Die Leitflächenkanten 542 der einzelnen Leitrippen bilden gemeinsam eine Einhüllende, welche der Einhüllenden 265 der Abströmfläche 285 des Luftfilterelementes 200 entspricht bzw. mit dieser korrespondiert. Damit wird eine optimale Aufteilung des Volumens innerhalb des Gehäusekörpers auf das Luftfilterelement 200 und die Strömungsleitvorrichtung 540 ermöglicht, da die Faltentiefe der Filterfalten an den Verlauf der Leitflächenkanten 542 der einzelnen Leitrippen der Strömungsleitvorrichtung 540 angepasst wird.

Im Gegensatz zu den variablen Filterfaltentiefen müsste sich beispielsweise bei einem Luftfilterelement mit konstanter Filterfaltentiefe die Tiefe der Filterfalten an derjenigen Filterfalte mit der geringsten Filterfaltentiefe orientieren. Dies würde zu einer erheblichen Einbuße der Filterfläche führen.

Fig. 32 zeigt eine Schnittansicht einer isometrischen Darstellung eines Luftfilters, in dessen Gehäusekörper 110 sich ein Luftfilterelement 200 und eine Strömungsleitvorrichtung 540 befinden. Die Anpassung der Abströmfläche des Luftfilterelementes 200 an den Verlauf der Leitflächen und der Leitflächenkanten der einzelnen Leitrippen der Strömungsleitvorrichtung ist deutlich zu erkennen.

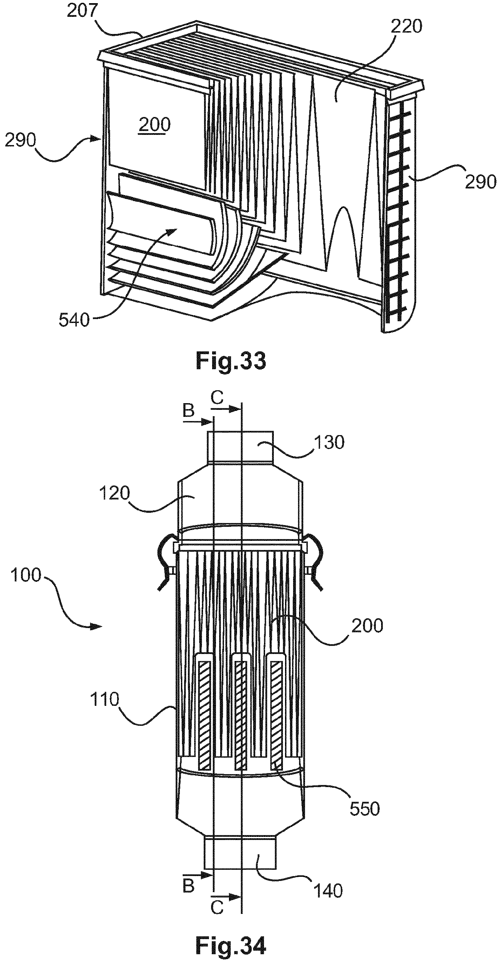

Fig. 33 zeigt eine Schnittansicht einer isometrischen Darstellung eines Luftfilterelementes 200 mit einer Strömungsleitvorrichtung 540.

Die einzelnen Leitrippen der Strömungsleitvorrichtung 540 sind dabei an dem Stützelement 290 angebracht.

Die Umlenkfunktion für den Luftstrom der Strömungsleitvorrichtung 540 ist in der Fig. 33 besonders deutlich zu erkennen. Der Luftstrom verlässt die Abströmfläche des Luftfilterelementes 200 im Wesentlichen in Richtung des Verlaufs einer Filterfalte 220 und wird von den Leitrippen der Strömungsleitvorrichtung 540 in einer Richtung orthogonal zu dem Verlauf der Filterfalte 220 gelenkt.

Die Umlenkrichtung des Luftstromes durch die Leitrippen kann natürlich in einem beliebigen Winkel erfolgen und an die Position der Ausströmöffnung 140 an dem Gehäuse des Luftfilters angepasst werden.

Es sei darauf hingewiesen, dass die Leitrippen der Strömungsleitvorrichtung 540 sowohl an den Stützelementen 290 eines Luftfilterelementes 200 angeordnet sein können, genauso gut können die Leitrippen der Strömungsleitvorrichtung 540 aber auch an dem Gehäusekörper 110 eines Luftfilters angeordnet sein. Im Falle, dass die Strömungsleitvorrichtung 540 an dem Gehäusekörper eines Luftfilters befestigt ist, kann ein Wechsel des Luftfilterelementes erfolgen, ohne dass dabei die Strömungsleitvorrichtung 540 mit ausgetauscht wird. Ein Austausch der Strömungsleitvorrichtung mit einem Luftfilterelement kann beispielsweise nicht unbedingt nötig sein, da die Strömungsleitvorrichtung einer Verschmutzung nicht in dem Maße ausgesetzt ist wie das Luftfilterelement, dessen elementare Aufgabe die Filterung von Schmutzpartikeln aus der Rohluft ist und somit eine Verschmutzung bzw. ein Verschleiß naturgemäß in einem stärkeren Ausmaß gegeben ist.

Fig. 34 zeigt eine Seitenansicht eines Luftfilters 100, wobei in dem Gehäusekörper 110 ein Luftfilterelement 200 und drei Adsorptionsfilterelemente für Kohlenwasserstoffe 550, insbesondere für leicht flüchtige Kohlenwasserstoffe, welche z.B. Aktivkohlmaterial aufweisen, angeordnet sind.

Bei den Adsorptionsfilterelementen für Kohlenwasserstoffe 550 kann es sich beispielsweise um eine Kohlenwasserstoffadsorptionsvorrichtung handeln. Die Adsorptionsfilterelemente für Kohlenwasserstoffe 550 sind dabei zwischen der Abströmfläche des Luftfilterelementes 200 und dem Reinluftanschluss 140 angeordnet. Freivolumina in dem Luftfilterelement ermöglichen dabei, dass die Adsorptionsfilterelemente für Kohlenwasserstoffe gemeinsam mit dem Luftfilterelement 200 in dem Gehäusekörper 110 angeordnet sein können und dabei die Filterfläche des Filtermediums des Luftfilterelementes 200 nur unwesentlich reduziert wird.

Die Adsorptionsfilterelemente für Kohlenwasserstoffe 550 können insbesondere fest mit dem Gehäusekörper 110 verbunden werden, d. h. dass sie beispielsweise einer mechanischen Belastung standhalten können.

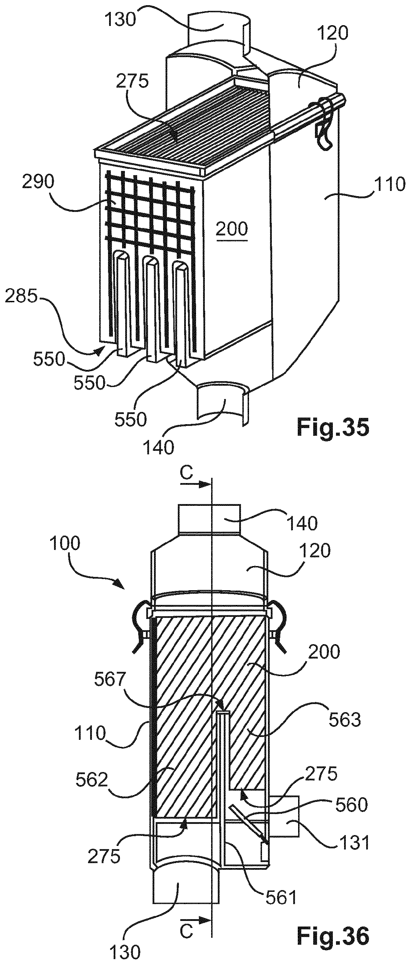

Fig. 35 zeigt eine Schnittansicht einer isometrischen Darstellung eines Luftfilters, wobei der Gehäusekörper 110 ein Luftfilterelement 200 und drei Adsorptionsfilterelemente für Kohlenwasserstoffe 550 aufweist. Die Adsorptionsfilterelemente für Kohlenwasserstoffe 550 ragen in die Abströmfläche 285 des Luftfilterelementes 200 und in das Stützelement 290 hinein.

Fig. 36 zeigt einen Luftfilter 100 mit einem Gehäusekörper 110 und einem Gehäusedeckel 120. Der Gehäusekörper 110 weist eine erste Einströmöffnung 130 und eine zweite Einströmöffnung 131 auf. Der Gehäusedeckel 120 weist die Ausströmöffnung 140 auf. Das Luftfilterelement 200 weist eine geteilte Anströmfläche 275 auf, wobei die Anströmfläche 275 von einer Gehäusetrennwand 561 des Gehäusekörpers getrennt wird und eine erste Rohluftkammer 562 und eine zweite Rohluftkammer 563 bildet. Die Gehäusetrennwand 561 weist eine Dichtfläche 567 auf, so dass die erste Rohluftkammer 562 von der zweiten Rohluftkammer 563 dichtend getrennt ist.

Weiterhin weist der Gehäusekörper 110 eine Gehäuseluftströmklappe 560 auf, welche ausgeführt ist, den zweiten Rohluftanschluss bzw. die zweite Einströmöffnung 131 grundsätzlich, d.h. in einem ersten Betriebszustand, zu verschließen. Beispielsweise kann die Gehäuseluftströmklappe 560 mittels einer Spannfeder im geschlossenen Zustand gehalten werden. Selbstverständlich sind auch andere Schließmechanismen möglich, welche bei einem vorgegebenen Unterdruck in dem Gehäuse die Gehäuseluftströmklappe öffnen, so dass Luft einströmen kann.

Im ersten Betriebszustand des Luftfilters 100 strömt Luft durch die erste Einströmöffnung 130 in den Luftfilter ein und wird über die erste Rohluftkammer 562 gefiltert und verlässt den Luftfilter durch die Ausströmöffnung 140. Im Falle von starken Verschmutzungen der ersten Rohluftkammer oder von Verstopfungen, beispielsweise durch angesaugten Schnee durch die erste Einströmöffnung 130, erhöht sich ein Unterdruck in dem Luftfiltergehäuse, weil über die Ausströmöffnung 140 weiterhin Luft aus dem Luftfilter gesaugt wird. Damit kann beispielsweise innerhalb des Gehäuses ein Unterdruck entstehen, welcher dazu führt, dass die Gehäuseluftströmklappe 560 die zweite Einströmöffnung 131 öffnet und so Luft durch die zweite Einströmöffnung 131 und die zweite Rohluftkammer 563 in das Gehäuse eingesaugt wird und der Luftfilter in einem zweiten Betriebszustand betrieben wird.

Fig. 36 zeigt, dass sich die variable Faltentiefe auch auf die Anströmfläche 275 des Luftfilterelementes 200 auswirken kann. Im Gegensatz zu den bisher gezeigten Ausführungsbeispielen, in welchen jeweils die Abströmfläche 285 ein Freivolumen aufwies, weist in Fig. 36 die Anströmfläche 275 ein Freivolumen auf.

In diesem Zusammenhang sei insbesondere darauf hingewiesen, dass sowohl die Anströmfläche 275 als auch die Abströmfläche 285 ein beliebig geformtes Freivolumen 500 für Elemente innerhalb des Gehäusekörpers 110 des Luftfilters 100 aufzeigen können, wie dies auch in den Fig. 5F und 5G gezeigt wurde.

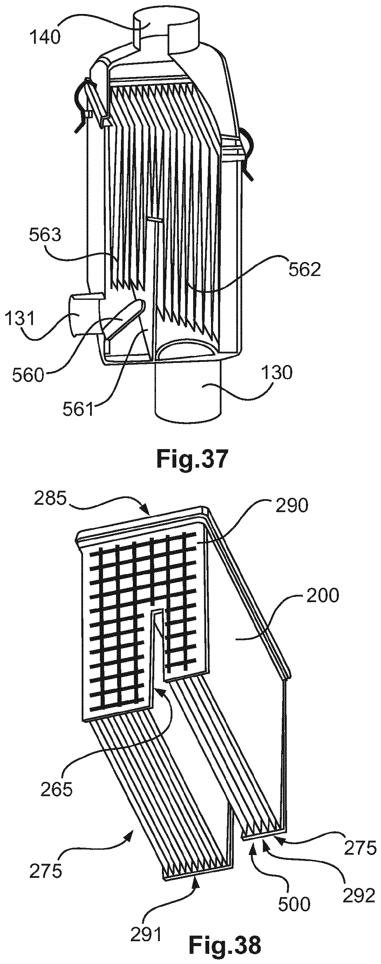

Fig. 37 zeigt eine Schnittansicht einer isometrischen Darstellung eines Luftfilters mit einer ersten Rohluftkammer 562 und einer zweiten Rohluftkammer 563, welche jeweils über eine erste Einströmöffnung 130 bzw. eine zweite Einströmöffnung 131 mit Luft bzw. Rohluft versorgt werden, wobei die zweite Einströmöffnung 131 eine Gehäuseluftströmklappe 560 aufweist, welche ausgeführt ist, Luft durch die Einströmöffnung 131 lediglich im Falle einer Verstopfung der ersten Rohluftkammer 562 einströmen zu lassen. Die erste Rohluftkammer 562 ist von der zweiten Rohluftkammer 563 durch die Gehäusetrennwand 561 getrennt.

Fig. 38 zeigt eine isometrische Darstellung eines Luftfilterelementes 200 der Ausführungsbeispiele in den Figuren 36 und 37. Die Anströmfläche 275 weist zwei zueinander abgestufte Teilflächen auf, welche durch das Freivolumen 500 in dem Luftfilterelement 200 und dem Stützelement 290 getrennt sind. Damit weist das Luftfilterelement 200 in Fig. 38 Filterfalten mit drei verschiedenen Filterfaltentiefen auf: Die Filterfalten im ersten Teil der Anströmfläche 275, die Filterfalten im Bereich des Freivolumens 500 und die Filterfalten im zweiten Bereich der Anströmfläche 275.

Ebenso wie das abströmseitige Ende bzw. Kante des Stützelementes 290 kann natürlich auch das anströmseitige Ende bzw. Kante des Stützelementes 290 eine erste Haltefläche 291 und eine zweite Haltefläche 292 aufweisen.

Die Halteflächen 291, 292 sind jeweils an der Anströmseite bzw. Abströmseite des Luftfilterelementes angebracht in Abhängigkeit des Einsetzrichtung des Luftfilterelementes in den Gehäusekörper. Wird das Luftfilterelement mit der Anströmfläche voran in den Gehäusekörper eingesetzt, befinden sich die Halteflächen 291, 292 in einem bevorzugten Ausführungsbeispiel an der anströmseitigen Kante des Stützelementes. Umgekehrt befinden sich die Halteflächen 291, 292 in einem bevorzugten Ausführungsbeispiel an der abströmseitigen Kante des Stützelementes, wenn das Luftfilterelement mit der Abströmfläche des Luftfilterelementes voran in den Gehäusekörper eingesetzt wird.

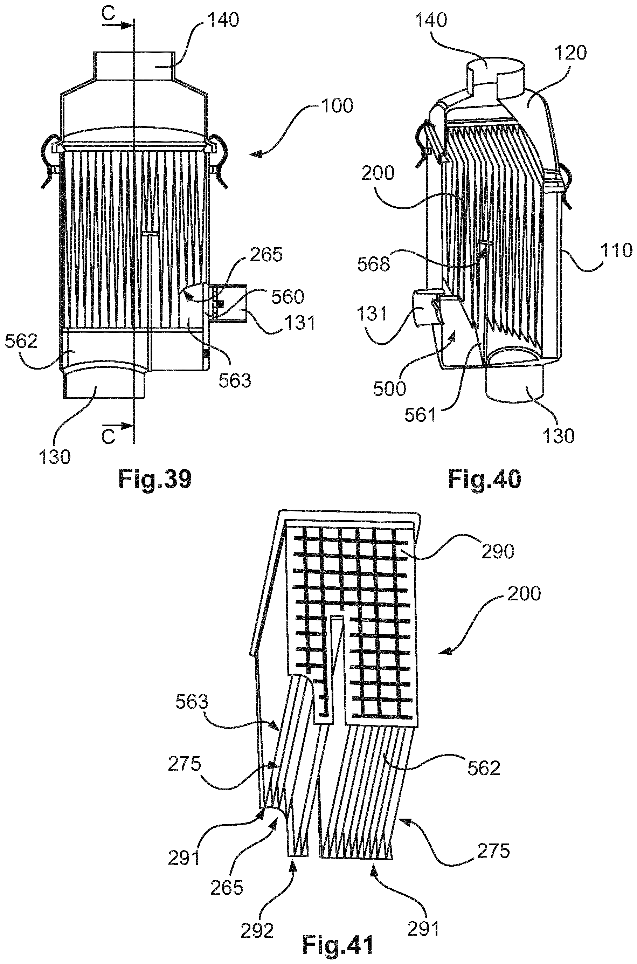

Fig. 39 zeigt einen Luftfilter 100 analog zu dem Luftfilter 100, welcher in Fig. 36 gezeigt wurde.

Fig. 36 zeigt die Gehäuseluftströmklappe 560 an der zweiten Einströmöffnung 131 im geöffneten Zustand, wobei Fig. 39 die Gehäuseluftströmklappe 560 der zweiten Einströmöffnung 131 im geschlossenen Zustand zeigt. Damit wird in der Darstellung in Fig. 39 lediglich Luft über die erste Einströmöffnung 130 in das Gehäuse des Luftfilters 100 eingesaugt. Im Gegensatz dazu wird in Fig. 36 Luft sowohl über die erste Einströmöffnung 130, als auch über die zweite Einströmöffnung 131 eingesaugt, soweit die erste Rohluftkammer 562 der ersten Einströmöffnung 130 nicht vollständig verstopft ist. Im Falle, dass die erste Rohluftkammer 562 in Fig. 36 vollständig verstopft ist, wird Luft lediglich über die zweite Einströmöffnung 131 und die zweite Rohluftkammer 563 eingesaugt.

Damit zeigt Fig. 36 den Luftfilter im zweiten Betriebszustand (d.h. Luft wird über die zweite Einströmöffnung angesaugt) und Fig. 39 den Luftfilter im ersten Betriebszustand (d.h. Luft wird über die erste Einströmöffnung eingesaugt).

Weiterhin im Unterschied zu Fig. 36 weist die Einhüllende 265 der Anströmfläche 275 des Luftfilterelementes keinen abgestuften sondern einen abgerundeten Übergang benachbarter Faltenkanten auf. Der abgerundete Verlauf der Einhüllenden 265 kann beispielsweise an die Öffnungsbewegung der Gehäuseluftströmklappe 560 angepasst sein und so zu einer weiteren Erhöhung der zur Verfügung stehenden Filterfläche des Luftfilterelementes beitragen.

Fig. 40 zeigt eine Schnittansicht einer isometrischen Darstellung des in Fig. 39 gezeigten Luftfilters.

Die Gehäusetrennwand 561 weist eine Haltefläche 568 auf, welche Haltefläche ausgelegt ist, das Luftfilterelement 200 im Bereich einer ersten Haltefläche oder einer zweiten Haltefläche 291, 292 des Stützelementes 290 aufzunehmen und zu positionieren bzw. zu fixieren. Weiterhin ist der Fig. 40 zu entnehmen, dass das Freivolumen 500 im Bereich der Anströmfläche des Luftfilterelementes 200 hinter der zweiten Einströmöffnung 131 ausgeführt ist, ein Öffnen der Gehäuseluftströmklappe 560 zu ermöglichen.

Fig. 41 zeigt eine isometrische Darstellung eines Luftfilterelementes 200 für einen Luftfilter wie in den Fig. 39 und 40 gezeigt. Es ist deutlich zu erkennen, dass die Einhüllende 265 der Anströmfläche 275 und des Stützelementes 290 einen abgerundeten Verlauf im Bereich der zweiten Rohluftkammer 563 aufweist.

Ein Luftfilterelement 200 mit einem Freivolumen 500 für die Gehäusetrennwand 561 ermöglicht, dass die erste Rohluftkammer 562 und die zweite Rohluftkammer 563 von einer Gehäusetrennwand 561 mit variabler Höhe (d.h. in einer Richtung von der Abströmfläche zu der Anströmfläche) getrennt werden können, wobei die Filterfaltentiefe an die Höhe der Gehäusetrennwand angepasst werden kann. Damit kann die Größe der ersten Rohluftkammer 562 und die Größe der zweiten Rohluftkammer 563 aneinander angepasst werden und ihr Größenverhältnis zueinander für die jeweiligen Bedürfnisse optimiert werden.

Das Stützelement 290 weist im Bereich der zweiten Rohluftkammer 563 eine erste Haltefläche 291 und eine zweite Haltefläche 292 auf, wobei das Stützelement 290 zwischen der ersten Haltefläche 291 und der zweiten Haltefläche 292 einen abgerundeten Übergang bzw. einen abgerundeten Verlauf aufweist.

Im Bereich der ersten Rohluftkammer 562 weist das Stützelement lediglich eine erste Haltefläche 291 auf.

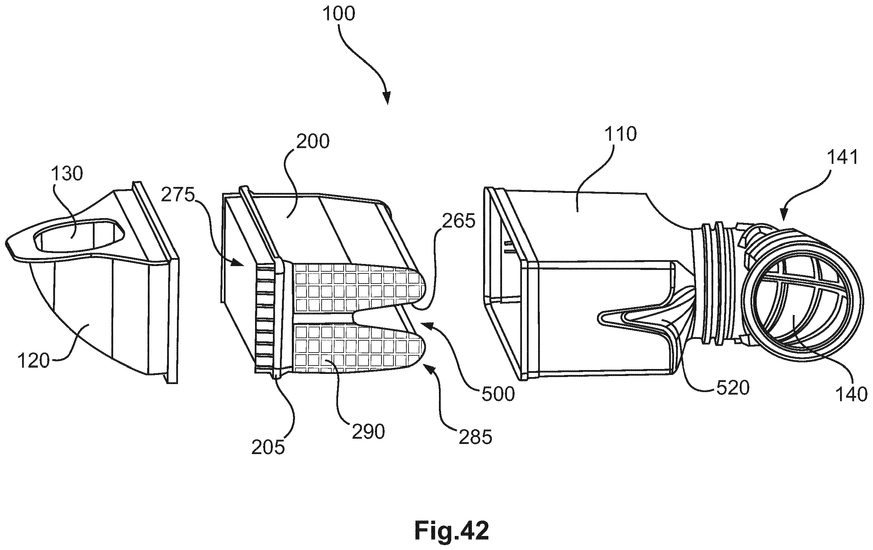

Fig. 42 zeigt eine isometrische Darstellung eines Luftfilters 100 mit einem Gehäusedeckel 120, einem Luftfilterelement 200 und einem Gehäusekörper 110. Der Gehäusedeckel 120 weist eine Einströmöffnung 130 auf, wobei der Luftstrom durch den Gehäusedeckel von der Einströmöffnung auf die Anströmfläche 275 umlenkt. Die Strömungsrichtung des Luftstroms durch die Einströmöffnung 130 ist parallel zu der Anströmfläche 275 und muss entsprechend durch den Gehäusedeckel umgelenkt werden. Der Gehäusekörper 110 weist eine Gehäuserippe 520 und eine Ausströmöffnung 140 an einem Ausströmstutzen 141 auf.

Die Gehäuserippe 520 kann der Stabilität des Gehäusekörpers dienen, die Gehäuserippe 520 kann aber auch durch äußere Vorgaben des Einbauraums für den Luftfilter 100 vorgegeben sein.

Das Luftfilterelement 200 weist ein Stützelement 290 und eine umlaufende Dichtung 205 auf. Weiterhin weist das Luftfilterelement 200 eine ebene Anströmfläche 275 auf und eine Abströmfläche 285, wobei die Einhüllende 265 der Faltenkanten auf der Abströmfläche 285 ein Freivolumen bildet, wobei das Freivolumen an die Gehäuserippen 520 angepasst ist und dessen Verlauf bzw. die Einhüllende der Abströmfläche beispielsweise einen parabelförmigen Verlauf aufweist.

Ebenso wie der Gehäusedeckel ausgeführt ist, die Strömungsrichtung des Luftstroms auf der Anströmseite, d.h. von der Anströmöffnung 130 auf die Anströmfläche 275 umzulenken, ist auch der Ausströmstutzen 141 ausgeführt, die Strömungsrichtung des Luftstroms auf der Abströmseite, d.h. von der Abströmfläche 285 zu der Ausströmöffnung 140 umzulenken.

Es sei darauf hingewiesen, dass sowohl auf der Abströmseite als auch auf der Anströmseite eine beliebige Umlenkung des Luftstroms erfolgen kann.

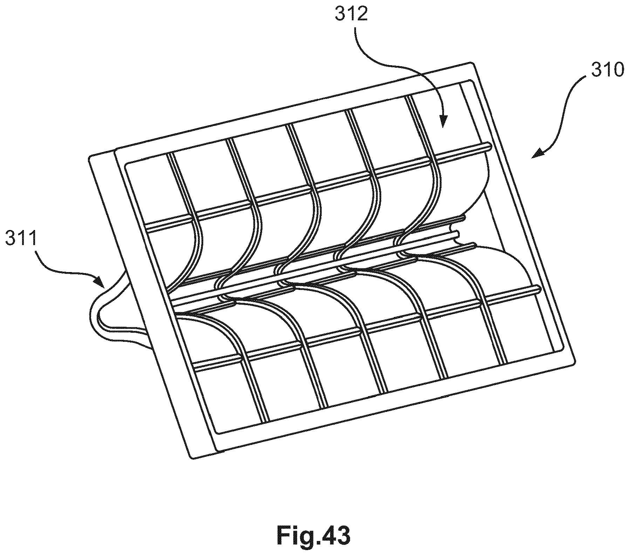

Fig. 43 zeigt ein Funktionsbauteil 300, welches ausgeführt ist, mit dem Luftfilter 100 aus Fig. 42 und dem korrespondierenden Hauptelement 200 aus Fig. 42 verwendet zu werden.

Die Anströmfläche 311 des Funktionsbauteils 300 bzw. Zusatzfilterelementes 310 ist ausgeführt, mit dem Freivolumen 500 und der Einhüllenden 265 des Luftfilterelementes 200 in Fig. 43 zu korrespondieren. Durch das so ausgestaltete Funktionsbauteil wird die Anströmfläche 311 und die Abströmfläche 312 des Zusatzfilterelementes 310 erhöht, womit die Filterleistung erhöht werden kann.

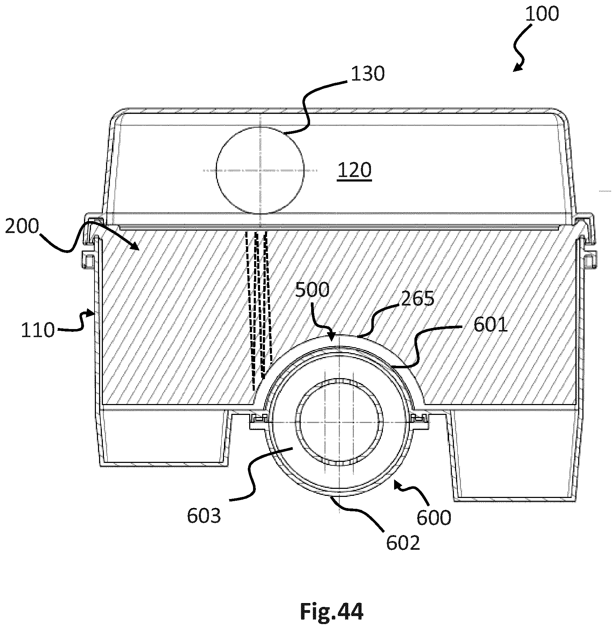

Fig. 44 zeigt eine mittige Schnittdarstellung eines Luftfilters 100 mit einem Gehäusekörper 110, einem Gehäusedeckel 120 und einem eingesetzten Filterelement 200. Ein Resonator 520, z.B. ein Breitbandresonator bzw. eine Hohlraumresonatorgeometrie 530, welche ausgeführt ist, Strömungsgeräusche der durchströmenden Luft zu reduzieren, ist platzsparend untergebracht. Der Resonator 530 wird senkrecht zur Zeichenebene der Fig. 44 durchströmt. Er befindet sich teilweise in dem Freivolumen 500 entlang der Einhüllenden 265 an der Abströmfläche des Luftfilterelements 200. Der Resonator 530 ist von einem Außenmantel 600 bzw. Resonatorgehäuse umgeben. Ein dem Filterelement 200 zugewandter Teil 601 des Außenmantels 600 wird durch einen Teil der Gehäusewand gebildet. Ein Teil 602 des Außenmantels 600 ist mit der Gehäusewand, z. B. mittels Schweißens, verbunden. In dem Außenmantel 600 ist ein Resonatoreinlegeteil 603 angeordnet.

Ein Luftfilterelement 200 mit Filterfalten von variabler Faltentiefe ermöglicht die Anbringung eines Resonators 520 an dem Gehäusekörper 110 und gleichzeitig die Maximierung der Filterfläche des Filtermediums des Luftfilterelementes 200. In Fig. 44 sind einige Filterfalten schematisch durch gestrichelte Linien angedeutet. Die nicht gezeigten Faltenkanten 225 erstrecken sich folglich senkrecht zur Zeichenebene der Fig. 44 und damit parallel zur Durchströmungsrichtung des Resonators 530.

Das Freivolumen 500 ist an die räumlichen Ausmaße des Resonators 520 angepasst. Daneben, d.h. in einem Bereich des Gehäusekörpers 110, welcher nicht von dem Resonator 520 beansprucht wird, weisen die Filterfalten des Luftfilterelements 200 eine nicht reduzierte Filterfaltentiefe auf, so dass die Filterfläche des Filtermediums durch die Anbringung des Resonators 520 am Gehäusekörper 110 nur minimal reduziert wird.

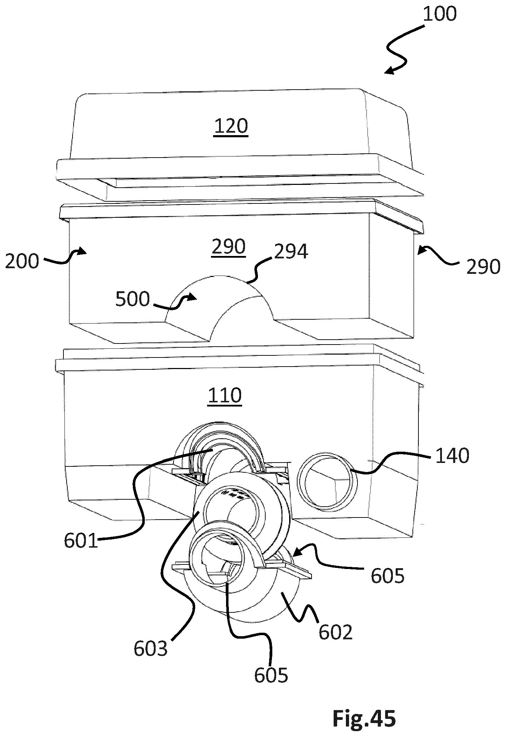

Fig. 45 zeigt eine Explosionsdarstellung der Bauteile des in Fig. 44 gezeigten Luftfilters 100. Der Teil 602 des Außenmantels 600 bzw. Gehäuses des Resonators 520 weist an seinen gegenüberliegenden Enden jeweils einen Resonatoranschluss 605 auf. An einem Anschluss strömt die Luft in den Resonator 520 hinein, an dem anderen Anschluss 520 wieder hinaus. Die Luftströmung durch den Resonator 520 ist von der Luftströmung durch das Filterelement 200 getrennt. Neben dem Resonator 520 ist der Gehäusekörper 110 mit einen Ausströmöffnung 140 versehen. Gegenüberliegend am Gehäusedeckel 120 ist eine Einströmöffnung 130 vorgesehen (Fig. 44).

Vorzugsweise weist das Filterelement 200 an den in Durchströmungs- bzw. Erstreckungsrichtung des Resonators 520 gegenüberliegenden Seiten jeweils eine Stützstruktur 290 mit einer Einbuchtung 294 auf.

## Patentansprüche

1. Luftfilter mit einem Luftfiltergehäuse (105) und einem Luftfilterelement (200), wobei das Luftfiltergehäuse (105) eine erste Luftströmungsöffnung (130, 140) und eine Luftfilterelementaufnahme (150) aufweist, und wobei das Luftfilterelement (200) ausgebildet ist mit einer Anströmfläche (275), einer Abströmfläche (285), einem Filtermedium (210) und einer Stützstruktur (290), wobei sich das Filtermedium zwischen der Anströmfläche und der Abströmfläche erstreckt, wobei das Filtermedium zwischen der Anströmfläche und der Abströmfläche seitlich an der Stützstruktur befestigt ist, wobei die Stützstruktur in ihrer Erstreckungsfläche (293) einen Rückversatz, insbesondere in Form einer Einbuchtung (294), in Richtung der Anströmfläche und der Abströmfläche aufweist, wobei das Filtermedium (210) ein aus Falten (220) gebildetes Faltenfiltermedium ist, wobei die Falten jeweils ein erstes Faltenblatt (230) und ein zweites Faltenblatt (240) aufweisen, die jeweils mit einer Faltenblattkante (231, 241; 232, 242) an einer Faltenkante (225) aneinandergrenzen und die ersten Faltenblätter (230) benachbarter Falten (220) im Wesentlichen parallel zueinanderliegen, wobei sich die ersten und zweiten Faltenblätter zwischen der Anströmfläche (275) und der Abströmfläche (285) erstrecken, wobei die Stützstruktur (290) die Faltenblätter (230, 240) seitlich an den nicht an Faltenblattkanten von jeweils benachbarten Filterblättern angrenzenden Faltenblattkanten (233, 243) abstützt, und wobei die Luftfilterelementaufnahme (150) eine Halteflächenaufnahme (190) aufweist, wobei die Halteflächenaufnahme mit wenigstens einem Bereich der Stützstruktur (290) in einer eine Haltekraft übertragenden Weise in Kontakt ist, **dadurch gekennzeichnet, dass** dem Rückversatz die Abströmfläche (285) zugeordnet ist, und die Abströmfläche (285) eine mit wenigstens einem Teil des Rückversatzes der Stützstruktur korrespondierende Form aufweist, indem mehrere Falten (220) mit variierender Faltentiefe vorgesehen sind, so dass ein Freivolumen (500) gebildet ist, und dass innerhalb des Gehäusekörpers (110) vor der Ausströmöffnung (140) ein Resonator (530) derart angeordnet ist, dass er sich in dem Freivolumen (500) an der Abströmfläche des Luftfilterelementes (200) befindet.

2. Luftfilter gemäß Anspruch 1, wobei die Stützstruktur (290) entlang des Rückversatzes das Filtermedium (210) seitlich abdeckt.

3. Luftfilter gemäß einem der Ansprüche 1 und 2, wobei die Stützstruktur (290) wenigstens eine Haltefläche (291) aufweist, welche eine Haltekraft in Richtung entlang der Erstreckungsfläche (293) der Stützstruktur (290) aufnimmt.

4. Luftfilter gemäß einem der Ansprüche 1 und 3, wobei die Stützstruktur (290) eine erste Haltefläche (291) und eine zweite Haltefläche (292) aufweist, welche insbesondere eine Haltekraft in Richtung entlang der Erstreckungsfläche (293) der Stützstruktur (290) aufnehmen, wobei der Rückversatz zwischen der ersten Haltefläche (291) und der zweiten Haltefläche (292) der Stützstruktur ausgebildet ist.

5. Luftfilter gemäß einem der Ansprüche 1 bis 4, wobei die Stützstruktur (290) eine (dritte) Haltefläche (296) aufweist, welche in dem Rückversatz angeordnet ist und welche insbesondere eine Haltekraft in Richtung entlang der Erstreckungsfläche (293) der Stützstruktur (290) aufnimmt.

6. Luftfilter gemäß einem der Ansprüche 1 bis 5, wobei sich die dem Rückversatz zugeordnete An- bzw. Abströmfläche (275, 285) des Filtermediums (210) bis in einen Bereich seitlich des Rückversatzes erstreckt.

7. Luftfilter gemäß einem der Ansprüche 1 bis 6, wobei die dem Rückversatz zugeordnete An- bzw. Abströmfläche (275, 285) wenigstens abschnittsweise eine eindimensionale konkave oder konvexe Form aufweist, wobei die Krümmung der konkaven bzw. konvexen Form wenigstens abschnittsweise mit wenigstens einem Teil des Rückversatzes korrespondiert.

8. Luftfilter gemäß einem der Ansprüche 1 bis 7, wobei die Faltenblätter (230, 240) seitlich an den nicht an Faltenblattkanten von jeweils benachbarten Filterblättern angrenzenden Faltenblattkanten (233, 243) in die Stützstruktur (290) eingebettet sind.

9. Luftfilter gemäß einem der Ansprüche 1 bis 8, wobei zumindest ein Teil der mehreren Falten (220) mit variierender Faltentiefe aus einer durchgehenden Filtermedienbahn gefertigt ist.

10. Luftfilter gemäß einem der Ansprüche 1 bis 9, wobei benachbarte Faltenblätter (230, 240) gegenseitig durch wenigstens eine Abstandshalteeinrichtung stabilisiert sind, welche insbesondere parallel zu den nicht an Faltenblattkanten von jeweils benachbarten Filterblättern angrenzenden Faltenblattkanten (233, 243) verläuft.

11. Luftfilter gemäß einem der vorigen Ansprüche, wobei die Halteflächenaufnahme (190, 191, 192) mit wenigstens einer Haltefläche an der Stützstruktur (290), insbesondere mit wenigstens einer der ersten, zweiten und dritten Haltefläche an der Stützstruktur (290), derart in Eingriff ist, dass der Eingriff eine Haltekraft in Richtung entlang der Erstreckungsfläche (293) der flächigen Stützstruktur (290) aufnimmt.

12. Luftfilter gemäß einem der vorigen Ansprüche, wobei die Luftströmungsöffnung (130, 140) des Luftfiltergehäuses (105) zumindest teilweise in den Rückversatz der Stützstruktur (290) mündet.

13. Luftfilter gemäß einem der vorigen Ansprüche, wobei das Luftfiltergehäuse (105) einen Vorsprung (194) aufweist, wobei der Rückversatz mit dem Vorsprung in dem Luftfiltergehäuse in einem positionierenden Eingriff steht.

## Claims

1. Air filter having an air filter housing (105) and an air filter element (200), wherein the air filter housing (105) features a first airflow aperture (130, 140) and an air filter element receptacle (150), and wherein the air filter element (200) is realized with an inflow surface (275), an outflow surface (285), a filter medium (210) and a support structure (290), wherein the filter medium extends between the inflow surface and the outflow surface, wherein the filter medium is attached laterally to the support structure between the inflow surface and the outflow surface, wherein the support structure features in its extension surface (293) a return offset, in particular in the shape of an indentation (294), in the direction of the inflow surface and the outflow surface, wherein the filter medium (210) is a folded filter medium formed by folds (220), wherein the folds feature each a first folding leave (230) and a second folding leave (240) which adjoin each a fold edge (225) with a folding leave edge (231, 241; 232, 242) and the first folding leaves (230) of adjacent folds (220) are substantially parallel to each other, wherein the first and second folding leaves extend between the inflow surface (275) and the outflow surface (285), wherein the support structure (290) laterally supports the folding leaves (230, 240) at the folding leave edges (233, 243) not adjacent to folding leave edges of respective adjacent filter leaves, and wherein the air filter element receptacle (150) features a holding surface receptacle (190), wherein the holding surface receptacle is in contact with at least one area of the support structure (290) so as to transmit a holding force, **characterized in that** the outflow surface (285) is allocated to the return offset, and the outflow surface (285) features a shape corresponding with at least one part of the return offset of the support structure by providing a plurality of folds (220) with varying fold depth so that a free volume (500) is formed, and that a resonator (530) is disposed inside the housing body (110) in front of the outflow opening (140) in such a way that it is located in the free volume (500) at the outflow surface of the air filter element (200).

2. Air filter according to claim 1, wherein the support structure (290) laterally covers the filter medium (210) along the return offset.

3. Air filter according to one of the claims 1 and 2, wherein the support structure (290) features at least one holding surface (291) which receives a holding force in the direction along the extension surface (293) of the support structure (290).

4. Air filter according to one of the claims 1 and 3, wherein the support structure (290) features a first holding surface (291) and a second holding surface (292) which in particular receive a holding force in the direction along the extension surface (293) of the support structure (290), wherein the return offset is realized between the first holding surface (291) and the second holding surface (292) of the support structure.

5. Air filter according to one of the claims 1 to 4, wherein the support structure (290) features a (third) holding surface (296) which is disposed in the return offset and which in particular receives a holding force in the direction along the extension surface (293) of the support structure (290).

6. Air filter according to one of the claims 1 to 5, wherein the inflow or outflow surface (275, 285) of the filter medium (210) allocated to the return offset extends into an area laterally of the return offset.

7. Air filter according to one of the claims 1 to 6, wherein the inflow or outflow surface (275, 285) features at least sectionwise a one-dimensional concave or convex shape, wherein the curvature of the concave or convex shape corresponds at least sectionwise with at least one part of the return offset.

8. Air filter according to one of the claims 1 to 7, wherein the folding leaves (230, 240) are laterally embedded in the support structure (290) at the folding leave edges (233, 243) not adjacent to folding leave edges of respective adjacent filter leaves.

9. Air filter according to one of the claims 1 to 8, wherein at least one part of the plurality of folds (220) of varying fold depth is made of a continuous filter medium web.

10. Air filter according to one of the claims 1 to 9, wherein adjacent folding leaves (230, 240) are mutually stabilized by at least one spacer means which extends in particular parallel to the folding leave edges (233, 243) not adjacent to folding leave edges of respective adjacent filter leaves.

11. Air filter according to one of the preceding claims, wherein the holding surface receptacle (190, 191, 192) engages at least one holding surface at the support structure (290), in particular at least one of the first, second and third holding surfaces at the support structure (290) in such a way that the engagement receives a holding force in the direction along the extension surface (293) of the planar support structure (290).

12. Air filter according to one of the preceding claims, wherein the airflow aperture (130, 140) of the air filter housing (105) at least partially opens into the return offset of the support structure (290).

13. Air filter according to one of the preceding claims, wherein the air filter housing (105) features a projection (194), wherein the return offset is in a positioning engagement with the projection in the air filter housing.

## Revendications

1. Filtre à air ayant un boîtier de filtre à air (105) et un élément de filtre à air (200), le boîtier de filtre à air (105) présentant une première ouverture d'écoulement d'air (130, 140) et un logement de l'élément de filtre à air (150), et l'élément de filtre à air (200) étant réalisé avec une surface d'afflux (275), une surface d'écoulement (285), un milieu filtrant (210) et une structure de support (290), le milieu filtrant s'étendant entre la surface d'afflux et la surface d'écoulement, le milieu filtrant étant attaché latéralement à la structure de support entre la surface d'afflux et la surface d'écoulement, la structure de support, dans sa surface d'extension (293), présentant un décalage arrière, notamment sous forme d'une entaille (294), dans le sens de la surface d'afflux et de la surface d'écoulement, le milieu filtrant (210) étant un milieu filtrant plié à partir de plis (220), les plis présentant chacun une première feuille de plis (230) et une seconde feuille de plis (240) qui sont chacune adjacentes à une arête de pliage (225) avec une arête de feuille de plis (231, 241 ; 232, 242) et les premières feuilles de plis (230) des plis adjacents (220) étant sensiblement parallèles entre elles, les premières et les secondes feuilles de plis s'étendant entre la surface d'afflux (275) et la surface d'écoulement (285), la structure de support (290) supportant les feuilles de plis (230, 240) latéralement aux arêtes de feuilles de plis (233, 243) non adjacentes aux arêtes de feuilles de plis des feuilles de filtre adjacentes respectives, et le logement de l'élément de filtre à air (150) présentant un logement de surface de retenue (190), le logement de surface de retenue étant an contact avec au moins une zone de la structure de support (290) dans une manière à transmettre une force de retenue, **caractérisé en ce que** la surface d'écoulement (285) est associée au décalage arrière, et la surface d'écoulement (285) présente une forme correspondant à au moins une partie du décalage arrière de la structure de support en fournissant une pluralité de plis (220) de profondeur de plis variable de sorte qu'un volume libre (500) soit formé, et qu'un résonateur (530) est disposé à l'intérieur du corps du boîtier (110) devant l'ouverture d'écoulement (140) de telle sorte qu'il se trouve dans le volume libre (500) au niveau de la surface d'écoulement de l'élément de filtre à air (200).

2. Filtre à air selon la revendication 1, la structure de support (290) couvrant latéralement le milieu filtrant (210) tout le long du décalage arrière.

3. Filtre à air selon l'une des revendications 1 et 2, la structure de support (290) présentant au moins une surface de retenue (291) qui accepte une force de retenue en direction tout le long de la surface d'extension (293) de la structure de support (290).

4. Filtre à air selon l'une des revendications 1 et 3, la structure de support (290) présentant une première surface de retenue (291) et une deuxième surface de retenue (292) qui acceptent notamment une force de retenue en direction tout le long de la surface d'extension (293) de la structure de support (290), le décalage arrière étant réalisé entre la première surface de retenue (291) et la deuxième surface de retenue (292) de la structure de support.

5. Filtre à air selon l'une des revendications 1 à 4, la structure de support (290) présentant au moins une (troisième) surface de retenue (296) qui est disposée dans le décalage arrière et qui accepte notamment une force de retenue en direction tout le long de la surface d'extension (293) de la structure de support (290).

6. Filtre à air selon l'une des revendications 1 à 5, la surface d'afflux respectivement d'écoulement (275, 285) du milieu filtrant (210) associée au décalage arrière s'étendant dans une zone de manière latérale du décalage arrière.

7. Filtre à air selon l'une des revendications 1 à 6, la surface d'afflux respectivement d'écoulement (275, 285) associée au décalage arrière présentant au moins dans certaines sections une forme concave ou convexe, la courbure de la forme concave respectivement convexe correspondant au moins dans certaines sections avec au moins une partie du décalage arrière.

8. Filtre à air selon l'une des revendications 1 à 7, les feuilles de plis (230, 240) étant incorporées latéralement dans la structure de support (290) aux arêtes de feuilles de plis (233, 243) non adjacentes aux arêtes de feuilles de plis des feuilles de filtre adjacentes respectives.

9. Filtre à air selon l'une des revendications 1 à 8, au moins une partie de la pluralité des plis (220) d'une profondeur des plis variable étant manufacturée à partir d'une bande média filtrant continue.

10. Filtre à air selon l'une des revendications 1 à 9, des feuilles de plis adjacentes (230, 240) étant stabilisées mutuellement par au moins un dispositif intercalaire qui s'étend notamment de manière parallèle aux arêtes de feuille de plis (233, 243) non adjacentes aux arêtes de feuille de plis des feuilles de filtre adjacentes respectives.

11. Filtre à air selon l'une des revendications précédentes, le logement de surface de retenue (190, 191, 192) étant en prise avec au moins une surface de retenue au niveau de la structure de support (290), notamment avec au moins une des première, deuxième et troisième surfaces de retenue au niveau de la structure de support (290) de telle sorte que la prise accepte une force de retenue en direction tout le long de la surface d'extension (293) de la structure de support plane (290).

12. Filtre à air selon l'une des revendication précédentes, l'ouverture d'écoulement d'air (130, 140) du boîtier de filtre à air (105) déboouchant au moins en partie dans le décalage arrière de la structure de support (290).

13. Filtre à air selon l'une des revendications précédentes, le boîtier de filtre à air (105) présentant une saillie (194), le décalage arrière étant en prise de positionnement avec la saillie dans le boîtier de filtre à air.
